(19) Europäisches Patentamt
European Patent Office
Office européen des brevets

(11) Publication number: **0 382 450 B1**

# (12) EUROPEAN PATENT SPECIFICATION

(45) Date of publication of patent specification: **28.06.95**

(51) Int. Cl.[6]: **C08F 8/22**, C10M 143/00

(21) Application number: **90301180.7**

(22) Date of filing: **05.02.90**

## (54) Method for the production of long chain hydrocarbyl substituted mono-or dicarboxylic acid materials.

(30) Priority: **07.02.89 CA 590328**

(43) Date of publication of application:
**16.08.90 Bulletin 90/33**

(45) Publication of the grant of the patent:
**28.06.95 Bulletin 95/26**

(84) Designated Contracting States:
**AT BE CH DE DK ES FR GB IT LI NL SE**

(56) References cited:
**EP-A- 0 295 789**
**WO-A-85/03504**
**FR-A- 2 312 510**
**FR-A- 2 321 508**
**US-A- 3 868 330**

(73) Proprietor: **EXXON CHEMICAL PATENTS INC.**
**200 Park Avenue**
**Florham Park**
**New Jersey 07932 (US)**

(72) Inventor: **Bansal, Jai Gopal**
**1695 Trinity Court**
**Sarnia,**
**Ontario, N7S 5P8 (CA)**
Inventor: **Emert, Jacob**
**484 Argyle Road**
**Brooklyn,**
**New York 11218 (US)**
Inventor: **Nong, Oon Chee**
**38 Toh Toch Road**
**05-05 Goodluck Garden,**
**Singapore 2159 (SG)**
Inventor: **Roper, Renee Marie**
**17 Winding Woods Way**
**Manalapan,**
**New Jersey 07726 (US)**

(74) Representative: **Northover, Robert Frank et al**
**Exxon Chemical Limited**
**Exxon Chemical Technology Centre**
**PO Box 1**
**Abingdon**
**Oxfordshire, OX13 6BB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

This instant invention relates to a process for the preparation of long chain hydrocarbyl substituted mono-and dicarboxylic acid materials. More particularly, the process involves the reaction of a long chain hydrocarbon polymer, generally a polyolefin, with an ethylenically unsaturated mono- or dicarboxylic acid material such as maleic anhydride or acrylic acid in the presence of chlorine.

High molecular weight or long chain hydrocarbyl substituted dicarboxylic acid materials such as polyisobutenyl substituted succinic anhydrides are well known in the art and have many important industrial uses. For example, they are useful as additives in lubricants and fuels and as intermediates in the preparation of additives such as dispersants for lubricants and fuels. They can be prepared by thermally reacting long chain hydrocarbon polymers, generally polyolefins (such as polyisobutylene), with ethylenically unsaturated dicarboxylic acid materials such as maleic anhydride at temperatures in excess of about 200 ° C. However, this reaction suffers from a relatively low degree of conversion and if an attempt is made to improve the degree of conversion by increasing the temperature or pressure, an undesirable degradation of maleic anhydride occurs with resulting formation of carbon mono- and dioxide, water and solids. For this reason, resort has been made to initial preparation of a halogenated hydrocarbon reactant followed by reaction of the halogenated hydrocarbon with maleic anhydride. However, this reaction has several drawbacks. A principal drawback is that it requires a first step of halogenating a hydrocarbon and a second step of reacting maleic anhydride with the halogenated hydrocarbon so obtained. Both steps are slow so that the overall process is extremely time-consuming.

Alternatives to this halogenation process are processes which involve the use of halogen such as chlorine, to facilitate attachment of maleic anhydride to the hydrocarbon such as a polyolefin backbone. Such alternative processes are described in US-A-3215707, US-A-3231587, US-A-3755169, US-A-3912764, GB-A-1543039, US-A-3868330, US-A-4110349, GB-A-1492337, US-A-4234435 and WO-A-85/03504.

The processes described in these patents suffer from one or more of the following drawbacks: the presence of relatively large amounts of unfunctionalized hydrocarbon polymer in the product residue, which unfunctionalized hydrocarbon polymer is very difficult or even impossible to efficiently and economically remove from the product residue; the presence in the product residue of insoluble sediment formed by more than one maleic anhydride group being incorporated into a single molecule of hydrocarbon polymer thereby reducing the proportion of hydrocarbon polymer available to maintain oil solubility; and the presence in the product residue of oxidized material which has been generated from the hydrocarbon polymer reactant or from the long chain hydrocarbyl substituted dicarboxylic acid material product, due to the harsh conditions of the oxidative and high temperature reaction environment.

It is apparent, therefore, that there is a need for a process which eliminates or reduces the drawbacks suffered by these prior processes, particularly in the use of high molecular weight polymers. The present invention provides such a process.

It is known from James V. Oldshue, Fluid Mixing Technology, p. 178 (McGraw Hill 1983), that as the ratio of tank depth-to-diameter increases, the use of multiple impellers is often recommended to improve the top-to-bottom flow over that which can be maintained (with difficulty) by use of a single axial-flow impeller. It is taught therein that inclusion of a second impeller does not have a significant impact on pumping volume. Rather, its principal purpose is to maintain a full top-to-bottom flow pattern, thereby utilizing the full depth of the tank.

In accordance with the instant invention there is provided a process for the preparation of long chain hydrocarbyl substituted mono- or dicarboxylic acid materials which comprises contacting in a reaction zone (preferably provided with plural zone mixing, as hereinafter defined) a long chain hydrocarbon polymer, which is a polyolefin, and an ethylenically unsaturated mono- or dicarboxylic acid material such as maleic anhydride with chlorine, with at least about 60 mol% of said chlorine being added to the reaction mixture containing said polyolefin and ethylenically unsaturated mono- or dicarboxylic acid material at a reaction temperature below about 170 ° C., wherein the reaction mixture is mixed employing a mixing energy of at least 0.788 w/L (4 HP/1000 gal) at least during the contacting of the chlorine therewith.

This process produces relatively high conversions of hydrocarbon polymer reactant to long chain hydrocarbyl substituted mono- or dicarboxylic acid material product, thereby reducing the amount of unfunctionalized hydrocarbon polymer in the product residue or mixture. This process selectivity produces more monofunctionalized long chain hydrocarbyl substituted mono- or dicarboxylic acid material product, i.e., wherein one molecule of long chain hydrocarbon polymer has one molecule of a mono- or dicarboxylic acid material attached thereto, for any given degree of incorporation of the mono- or dicarboxylic acid material, thereby enhancing the oil solubility of the product residue or mixture, and substantially reduces the amount of oxidized material generated from the hydrocarbon polymer reactant or from the mono- or

dicarboxylic acid material functionalized hydrocarbon polymer product. The process of this invention can therefore also provide products of improved, low color which contain decreased amounts of undesired reaction by-products. Further, the process of this invention provides improved polymer conversion efficiencies. Still further, the process can provide substantially complete chlorine utilization and minimizes or avoids chlorine gas breakthrough, thereby minimizing the $Cl_2$ gas loss and the attendant equipment and materials cost associated with treatment of substantial $Cl_2$ content gases in any overhead gas condenser/liquid recycle or other gas effluent system (e.g. gas scrubbers).

## BRIEF DISCRIPTION OF THE ACCOMPANYING DRAWINGS

Figure 1 is a cross-sectional diagrammatical view of a reaction zone useful in one embodiment of the process of the present invention employing dual zone mixing.

Figure 2 is a graphical plot of mixing power numbers ($N_p$) versus mixing Reynolds Numbers ($N_{Re}$) for a series of curves 1 through 7 providing correlations for the indicated types of impellers. Curves 1 and 3 apply to disk flat blade turbines, curves 2 and 4 to vertical fixed blade turbines, curve 5 to curved blade turbines, curve 6 to 45° pitched blade turbines and curve 7 to retreat blade turbines, in full baffled stirred tank reactors, wherein the impeller blades are characterized by the indicated ratio of the blade's diameter "D" to the vertical width "W".

## DESCRIPTION OF THE INVENTION

In accordance with the present invention there is provided a process for the preparation of long chain hydrocarbyl substituted mono- or dicarboxylic acid material product. The process of the instant invention comprises intimately contacting a reaction mixture comprising (A) long chain hydrocarbon polymer, which is a polyolefin, and (B) ethylenically unsaturated mono- or dicarboxylic acid material with chlorine, with 70 to 100%, preferably 80 to 100%, and more preferably 90 to 100%, of the total amount of chlorine employed in the process being added to said reaction mixture at a reaction temperature of not greater than about 170°C., wherein the reaction mixture is mixed at high total mixing energies, as defined hereinafter.

The long chain hydrocarbyl substituted mono- or dicarboxylic acid material includes the reaction products of the long chain hydrocarbon polymer, which is a polyolefin, with the monounsaturated carboxylic reactant comprising at least one member selected from the group consisting of (i) monounsaturated $C_4$ to $C_{10}$ dicarboxylic acid wherein (a) the carboxyl groups are preferably vicinal, (i.e. located on adjacent carbon atoms) and (b) at least one, preferably both, of said adjacent carbon atoms are part of said mono unsaturation; (ii) derivatives of (i) such as anhydrides or $C_1$ to $C_5$ alcohol derived mono- or di-esters of (i); (iii) monounsaturated $C_3$ to $C_{10}$ monocarboxylic acid wherein the carbon-carbon double bond is conjugated to the carboxy group, i.e, of the structure

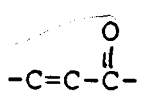 ;

and (iv) derivatives of (iii) such as $C_1$ to $C_5$ alcohol derived monoesters of (iii). Upon reaction with the polymer, the monounsaturation of the monounsaturated carboxylic reactant becomes saturated. Thus, for example, maleic anhydride becomes a polymer substituted succinic anhydride, and acrylic acid becomes a polymer substituted propionic acid.

Normally, not all of the polyolefin reacts with the unsaturated mono- or dicarboxylic acid material, i.e., acid or derivative, and the hydrocarbyl substituted mono- or dicarboxylic acid material will contain non-acid substituted polyolefin. The hydrocarbyl substituted mono-or dicarboxylic acid material (also referred to herein as "functionalized" polymer or polyolefin), non-acid substituted polyolefin, and any other polymeric byproducts, e.g. chlorinated polyolefin, (also referred to herein as "unfunctionalized" polymer) are collectively referred to herein as "product residue" or "product mixture". The non-acid substituted polyolefin is typically not removed from the product mixture because such removal is difficult and would be commercially unfeasible, and the product mixture, stripped of any unreacted monounsaturated $C_4$ to $C_{10}$ mono- or dicarboxylic acid, anhydride, or ester is employed per se as a lubricating or fuel oil additive or as an intermediate for further reaction with, inter alia, polyfunctional materials such as polyols or polyamines to form additives such as dispersants for lubricating oils or fuel oils.

One of the principal advantages of the instant process over the prior art processes resides in minimizing the amount of this unfunctionalized polyolefin present in the product mixture. This is due to the fact that by the use of the instant process relatively high conversions of the polyolefin reactant, on the order of at least about 80%, preferably at least about 85% (e.g. 85 to 100%), and more preferably from about 85 to 95% to the long chain hydrocarbyl substituted carboxylic acid material obtained, thereby minimizing the amount of unfunctionalized polyolefin in the product mixture.

The reaction of the hydrocarbon polymer, e.g., polyolefin, with the unsaturated mono- or dicarboxylic acid material generally produces more than one species of long chain hydrocarbyl substituted mono- or dicarboxylic acid material. One species, referred to herein as monofunctional long chain hydrocarbyl substituted mono- or dicarboxylic acid material, comprises a polyolefin molecule having only one mono- or dicarboxylic acid material moiety attached thereto. Such a monofunctional species is produced when only one molecule of unsaturated mono- or dicarboxylic acid material reacts with one molecule of polyolefin. Another species, referred to herein as polyfunctional long chain hydrocarbyl substituted acid material, comprises a polyolefin molecule having more than one, usually two, mono- or dicarboxylic acid material moieties attached thereto. Such a polyfunctional species is produced when more than one, usually two, molecules of unsaturated mono- or dicarboxylic acid material react with the same molecule of polyolefin.

Another advantage of the present process is that it is surprisingly selective for the monofunctional species, i.e., the monofunctional long chain hydrocarbyl substituted mono- or dicarboxylic acid material is produced in preference to the polyfunctional long chain hydrocarbyl substituted mono- or dicarboxylic acid material. It is to be understood that this selectivity is not exclusive and some of the polyfunctional species may also be produced. However, the proportion of the monofunctional species produced to the polyfunctional species produced is substantially higher than in conventional prior art process utilizing higher reaction temperatures.

Moreover, it has been surprisingly found that the process of this invention permits the formation of such high proportions of monofunctional species simultaneously with the high conversions to total substituted species. This process, therefore, has been surprisingly found to maximize both total conversion to product and the selectivity to monofunctional long chain hydrocarbyl substituted mono- or dicarboxylic acid material. As a consequence, high polymer conversion efficiencies (as hereinafter defined) can be achieved.

Yet another advantage of the instant process is improved low color and the reduction in the amount of oxidized material produced. This oxidized material is generally generated from the polyolefin reactant or from the long chain hydrocarbyl substituted mono- or dicarboxylic acid material due to the harsh conditions of the oxidative and high temperature reaction environment. The utilization of lower temperatures in the instant process reduces the amounts of these oxidized materials which are formed during the reaction.

Further, the process of this invention has been found to achieve some or all of the above advantages with greatly reduced levels of sediment formation in the reaction. Such sediment is highly undesirable on an industrial scale, since it contributes substantial cost to the manufacturing process due to the need to remove and dispose of this undesired by-product.

Exemplary of such monounsaturated carboxylic reactants are fumaric acid, itaconic acid, maleic acid, maleic anhydride, chloromaleic acid, chloromaleic anhydride, acrylic acid, methacrylic acid, crotonic acid, cinnamic acid, and lower alkyl (e.g., $C_1$ to $C_4$ alkyl) acid esters of the foregoing, e.g., methyl maleate, ethyl fumarate, methyl fumarate.

The olefin polymers for reaction with the unsaturated mono- or dicarboxylic acid material are homopolymers and interpolymers of polymerizable olefin monomers of 2 to 16 carbon atoms, usually 2 to 5 carbon atoms. The interpolymers are those in which two or more olefin monomers are interpolymerized according to well-known conventional procedures to form polyolefins having units within their structure derived from each of said two or more olefin monomers. Thus, "interpolymer(s)" as used herein is inclusive of copolymers, terpolymers and tetrapolymers. As will be apparent to those of ordinary skill in the art, these polyolefins are often conventionally referred to as "polyalkenes".

The olefin monomers from which the polyolefins are derived are polymerizable olefin monomers characterized by the presence of one or more ethylenically unsaturated groups (i.e., $>C=C<$); that is, they are mono-olefinic monomers such as ethylene, propylene, butene-1, isobutene, and octene-1 or polyolefinic monomers (usually diolefinic monomers) such as butadiene-1,3 and isoprene.

These olefin monomers are usually polymerizable terminal olefins; that is, olefins characterized by the presence in their structure of the group $>C=CH_2$. However, polymerizable internal olefin monomers (sometimes referred to in the patent literature as medial olefins) characterized by the presence within their structure of the group

$$>C-C=C-C<$$

can also be used to form the polyolefins. When internal olefin monomers are employed, they normally will be employed with terminal olefins to produce polyolefins which are interpolymers. For purposes of this invention, when a particular polymerized olefin monomer can be classified as both a terminal olefin and an internal olefin, it will be deemed to be a terminal olefin. Thus, pentadiene-1,3 (i.e. piperylene) is deemed to be a terminal olefin for purposes of this invention.

While the polyolefins generally are hydrocarbon polyolefins, they can contain non-hydrocarbon groups such as lower alkoxy, lower alkyl mercapto, hydroxy, mercapto, carboxy, (i.e.,

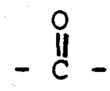

as in keto and aldehydo groups), nitro, halo, cyano, carboalkoxy (i.e.,

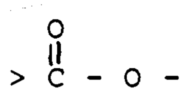

where "alkyl" is usually lower alkyl); alkanoyloxy where alkyl is usually lower alkyl, and the like provided the non-hydrocarbon substituents do not substantially interfere with formation of the long chain hydrocarbyl substituted mono- or dicarboxylic acid materials of this invention. When present, such non-hydrocarbon groups normally will not contribute more than about 10% by weight of the total weight of the polyolefins. Since the polyolefin can contain such non-hydrocarbon substituent, it is apparent that the olefin monomers from which the polyolefins are made can also contain such substituents. Normally, however, as a matter of practicality and expense, the olefin monomers and the polyolefins will be free from non-hydrocarbon groups.

Although the polyolefins may include aromatic groups (especially phenyl groups and lower alkyl- and/or lower alkoxy-substituted phenyl groups such as para-(tertbutyl) phenyl) and cycloaliphatic groups such as would be obtained from polymerizable cyclic olefins or cycloaliphatic substituted polymerizable acyclic olefins, the polyolefins usually will be free from such groups. Nevertheless, polyolefins derived from interpolymers of both 1,3-dienes and styrenes such as butadiene-1,3 and styrene or para-(tert-butyl)styrene are exceptions to this generalization. Again, because aromatic and cycloaliphatic groups can be present, the olefin monomers from which the polyolefins are prepared can contain aromatic and cycloaliphatic groups.

From what has been described hereinabove in regard to the polyolefin, it is clear that there is a general preference for aliphatic, hydrocarbon polyolefins free from aromatic and cycloaliphatic groups (other than the diene styrene interpolymer exception already noted). Within this general preference, there is a further preference for polyolefins which are derived from the group consisting of homopolymers and interpolymers of terminal hydrocarbon olefins of 2 to 16 carbon atoms. This further preference is qualified by the proviso that, while interpolymers of terminal olefins are usually preferred, interpolymers optionally containing up to about 40% of polymer units derived from internal olefins of up to 16 carbon atoms are also within a preferred group. A more preferred class of polyolefins are those selected from the group consisting of homopolymers and interpolymers of terminal olefins of 2 to 6 carbon atoms, more preferably 2 to 4 carbon atoms, optionally containing up to about 25% of polymer units derived from internal olefins of up to about 6 carbon atoms.

Specific examples of terminal and internal olefin monomers which can be used to prepare the polyolefins according to conventional, well-known polymerization techniques include ethylene; propylene; butene-1; butene-2; isobutene; pentene-1; hexene-1; heptene-1; octene-1; nonene-1; decene-1; pentene-2; propylene-tetramer; diisobutylene; isobutylene trimer; butadiene-1,2; butadiene-1,3; pentadiene-1,2; pentadiene-1,3; pentadiene-1,4; isoprene; hexadiene-1,5; 2-chloro-butadiene-1,3; 2-methyl-heptene-1; 3-cyclohexylbutene-1; 2-methyl-5-propyl-hexene-1; pentene-3; octene-4; 3,3-dimethyl-pentene-1; styrene; 2,4-dichloro styrene; divinylbenzene; vinyl acetate; allyl alcohol; 1-methyl-vinyl acetate; acrylonnitrile; ethyl acrylate; methyl methacrylate; ethyl vinyl ether; and methyl vinyl ketone. Of these, the hydrocarbon polymerizable monomers are preferred and of these hydrocarbon monomers, the terminal olefin monomers are particularly preferred.

Specific examples of polyolefins include polypropylenes, polybutenes, ethylene-propylene copolymers, styrene-isobutene copolymers, isobutene-butadiene-1,3 copolymers, propene-isoprene copolymers,

isobutene-chloroprene copolymers, isobutene-(para methyl)styrene copolymers, copolymers of hexene-1 with hexadiene-1,3, copolymers of octene-1 with hexene-1, copolymers of heptene-1 with pentene-1, copolymers of 3-methyl-butene-1 with octene-1, copolymers of 3,3-dimethyl-pentene-1 with hexene-1, and terpolymers of isobutene, styrene and piperylene. More specific examples of such interpolymers include copolymer of 95% (by weight) of isobutene with 5% (by weight) of styrene; terpolymer of 98% of isobutene with 1% of piperylene and 1% of chloroprene; terpolymer of 95% of isobutene with 2% of butene-1 and 3% of hexene-1; terpolymer of 60% of isobutene with 20% of pentene-1 and 20% of octene-1; copolymer of 80% of hexene-1 and 20% of heptene-1; terpolymer of 90% of isobutene with 2% of cyclohexene and 8% of propylene; and copolymer of 80% of ethylene and 20% of propylene. A preferred source of polyolefins are the poly(isobutene)s obtained by polymerization of $C_4$ refinery stream having a butene content of 35 to 75 percent by weight and an isobutene content of 30 to 60 percent by weight in the presence of a Lewis acid catalysts such as aluminum trichloride or boron trifluoride. These polybutenes contain predominantly (greater than about 80% of the total repeating units) of isobutene repeating units of the configuration

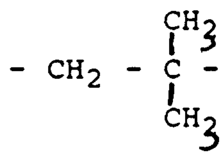

In some cases, the olefin polymer may be completely saturated, for example an ethylene-propylene copolymer made by a Ziegler-Natta synthesis using hydrogen as a moderator to control molecular weight.

The polyolefins used in the instant process have number average molecular weights ($\overline{M}_n$) of at least 1,200, e.g., within the range of 1,200 to 5,000, preferably at least about 1,500, e.g., between 1,500 and 5,000, more preferably at least about 1,900, e.g., between 1,900 and 4,000, and most preferably at least about 2,200, e.g., between 2,200 and 4,000. The number average molecular weight for such polymers can be determined by several known techniques. A convenient method for such determination is by gel permeation chromatography (GPC) which additionally provides molecular weight distribution information, see W. W. Yau, J. J. Kirkland and D. D. Bly, "Modern Size Exclusion Liquid Chromatography", John Wiley and Sons, New York, 1979. The olefin polymers will generally have (or can be treated, e.g. by fractionation, to form) a molecular weight distribution $\overline{M}_w/\overline{M}_n$ (that is, the ratio of the weight average molecular weight to the number average molecular weight) of from 1.0 to 4.5, and more typically from 1.5 to 3.0.

In the instant process at least 0.5 (e.g. from 0.5 to 1.5), preferably from 0.7 to 1.4, and more preferably from 1.0 to 1.3, moles of unsaturated mono- or dicarboxylic acid material reactant are charged to the reactor per mole of polyolefin reactant to form an initial reaction mixture into which chlorine is introduced under controlled reaction temperature conditions. It is generally preferred to utilize amounts of unsaturated mono- or dicarboxylic acid material reactant which facilitate the selectivity of the instant process for the monofunctional species of the long chain hydrocarbyl substituted mono- or dicarboxylic acid material product. This initial reaction mixture may or may not contain the total amount of the unsaturated mono- or dicarboxylic acid material reactant which is charged to the reactor. If it does not contain all of the unsaturated mono- or dicarboxylic acid material reactant the remainder of the acid material reactant is added to the reaction mixture simultaneously with or after the introduction of chlorine has begun, with all of the remainder of said acid material being added to the reaction mixture before the introduction of the chlorine is terminated. In the case where the initial reaction mixture does not contain all of the unsaturated mono- or dicarboxylic acid material reactant it contains at least sufficient acid material reactant to minimize degradation of the polyolefin reactant by the chlorine.

Preferably the initial reaction mixture, prior to the introduction of the chlorine, contains at least about 50 mole % of the total unsaturated mono- or dicarboxylic acid material reactant charged to the reactor. More preferably the initial reaction mixture contains 100 mole % of the total unsaturated mono- or dicarboxylic acid material reactant charged to the reactor by the time that an amount of chlorine constituting 20 - 40 mole % of the total chlorine ($Cl_2$) charge is introduced into the initial reaction mixture.

If the initial reaction mixture does not contain all of the unsaturated mono- or dicarboxylic acid material reactant prior to the introduction of chlorine the remainder of the acid reactant charge may be charged into the initial reaction mixture continuously or intermittently and concurrently with the start of chlorine introduction or after the introduction of chlorine has begun. Furthermore, it may be charged simultaneously with the chlorine, or sequentially with the chlorine, e.g., discrete charge of acid material followed by and alternating with a discrete charge of chlorine, provided the total acid material charge is charged into the

reaction mixture before the total chlorine charge is charged into the reaction mixture.

The total amount of chlorine charge introduced into the reaction mixture, i.e., the total amount of chlorine employed in the process, is generally at least about 0.6, e.g., from 0.6 to 1.5, preferably at least about 0.8, e.g., from 0.8 to 1.3, more preferably greater than 0.95, e.g., 0.95 to 1.25, and most preferably at least about 1.01, e.g., 1.05 to 1.2, moles of chlorine per mole of the total charge of unsaturated mono- or dicarboxylic acid material reactant. Generally, a mole ratio of chlorine to unsaturated mono- or dicarboxylic acid of 1.5:1, preferably 1.3:1, more preferably 1.2:1, and most preferably 1.1:1, should not be exceeded. It is most preferred to use at least equimolar amounts of chlorine, i.e., equimolar or a minor excess.

In various embodiments of the present invention the chlorine can be introduced in different manners. For example, in a certain embodiment the chlorine is introduced continuously or intermittently over a period of time. As mentioned hereinafore the chlorine may be introduced into the initial reaction mixture containing the total or partial unsaturated mono- or dicarboxylic acid material reactant charge. In the latter case the chlorine may be introduced simultaneously with the remaining uncharged unsaturated mono- or dicarboxylic acid material or in alternating charges of chlorine and unsaturated mono- or dicarboxylic acid material.

In one embodiment the initial reaction mixture contains the total unsaturated mono- or dicarboxylic acid material charge (admixed with the total polyolefin charge) and chlorine is charged into the reaction mixture in a continuous manner. In another embodiment chlorine is charged intermittently into a reaction mixture containing the total unsaturated mono- or dicarboxylic acid material and polyolefin charges.

In still another embodiment into an initial reaction mixture containing 100 mole % of the total polyolefin charge and about 50 mole % of the total unsaturated mono- or dicarboxylic acid material charge there are introduced, simultaneously, chlorine and unsaturated mono- or dicarboxylic acid material. The relative rate of introduction of chlorine and remaining uncharged acid material is such that when the reaction mixture contains 100 mole % of the acid material charged it contains about 30 mole % of the total chlorine charge, i.e., during this period about 50 mole % of the total charge of acid material and about 30 mole % of the total chlorine charge are introduced. The remaining 70 mole % of the total chlorine charge is then introduced into the reaction mixture.

The upper reaction temperature limit at which the majority of the chlorine is introduced in the instant process is critical. Thus, it is critical that at least about 60 mole %, preferably at least about 70 mole %, more preferably at least 90 mole %, and most preferably 100 mole % of the total chlorine charge be introduced into and intimately contacted with the reaction mixture at a reaction temperature of not greater than about 170 °C. After the above chlorine charges are effected, the reaction mixture's temperature can be raised above 170 °C., preferably between 170 ° to 200 °C, during the introduction of the remaining chlorine charge. The reaction mixture is then maintained at this further elevated temperature until the reaction is complete, i.e., until the evolution of hydrogen chloride ceases or until the desired degree of reaction is obtained.

The lower temperature limit during the introduction of chlorine and at which the reaction is carried out should be effective to form the long chain hydrocarbyl substituted mono- or dicarboxylic acid material. Generally such temperatures should not fall below about 60 °C. preferably not below about 100 °C., and most preferably not below about 110 °C.

Thus, for example, in the case where 100 mol % of the chlorine charge is introduced into the initial reaction mixture at a temperature not greater than about 170 °C. the reaction mixture is preferably maintained, during and subsequent to the chlorine introduction, at temperatures in the range of from 100 °C to 170 °C. In the two stage chlorine addition embodiment wherein at least about 60 mol % of the total chlorine charge is first introduced into the initial reaction mixture at a temperature not greater than about 170 °C. followed by the remainder of the total chlorine charge being added at a temperature above about 170 °C., the temperature during the introduction of this first charge of chlorine is generally in the range of 110 °C. to 170 °C. preferably 130 °C to 170 °C., and is subsequently raised during the introduction of the remainder of the chlorine charge to from 170 °C. to 200 °C.

Preferably, in addition to observing the above critical chlorine charge temperatures at least about 20 mol %, and more preferably at least about 25 mol %, of the total chlorine charge is introduced into and intimately contacted with the reaction mixture at a reaction temperature of not greater than about 150 °C.

If desired, a catalyst or promoter for reaction of the olefin polymer and monounsaturated carboxylic reactant (whether the olefin polymer and monounsaturated carboxylic reactant are contacted in the presence or absence of halogen (e.g., chlorine)) can be employed in the reaction zone. Such catalysts or promoters include alkoxides of Ti, Zr, V and Al, and nickel salts (e.g., Ni acetoacetonate and Ni iodide) which catalysts or promoters will be generally employed in an amount of from about 1 to 5,000 ppm by weight, based on the mass of the reaction medium.

The reaction times of the process are times which are effective for the reaction process will generally be dependent, at least to a degree, upon such variables as volume of the reaction mass, the temperature and concentration of the reactants, and other factors. Generally, however, the reaction time of the process ranges from 0.5 hour to 15 hours, and more usually from 3 to 10 hours. As is apparent to those skilled in the art, the duration of the reaction will depend at least in part on such variables as the quantity of reactants and reaction temperature.

The process of this invention can be carried out in the presence of a substantially inert, normally liquid solvent/diluent such as hydrocarbon mineral oils of lubricating oil viscosity, lower molecular weight hydrocarbon solvents. However, solvents generally are not necessary and in a preferred embodiment as described hereinafter are not used. When volatile lower molecular weight hydrocarbon solvents are used, it is often preferred to carry out the reaction at pressures in excess of atmospheric. Generally, however, the reaction can be carried out at atmospheric pressure or at pressures ranging up to about five atmospheres.

Since it is critical that the temperature of the reaction mixture be below about 170°C. throughout the entire chlorine addition period in one embodiment of the invention and throughout the period of introduction of at least 60 mole % of the total amount of chlorine added to the reaction mixture in the second embodiment of the invention, and since the reaction is exothermic, it is necessary to take steps to keep the temperature of the reaction mixture at or below this critical upper limit. This can be accomplished by controlling the rate of chlorine addition, by cooling the reactor vessel, or both. Generally, the slower the rate of chlorine introduction into the reaction mixture the lower the temperature of the reaction mixture. Thus, the rate of chlorine addition should be such as to keep the temperature of the reaction mixture below about 170°C. Such rate can be varied over time as needed to assist in such temperature control. However, in some cases controlling the temperature by controlling the rate of chlorine addition alone may be impossible or impractical. In such cases cooling of the reactor vessel, either in combination with adjusting the rate of chlorine addition or alone may be employed.

In the embodiment wherein a portion of the total chlorine charge is added to the reaction mixture maintained at a temperature below about 170°C., and the remainder of the chlorine charge is then added to the reaction mixture at temperatures above 170°C., it may sometimes be necessary or desirable to heat the reactor to achieve and maintain these elevated temperatures. However, in some situations the temperature of the reaction mixture can be maintained above about 170°C. by merely regulating, e.g., increasing, the rate of chlorine addition. In such cases heating the reactor to obtain these elevated temperatures is not necessary.

While the reaction can be carried out in the presence of air, the reaction is preferably carried out under an inert environment, e.g., in an inert atmosphere such as by nitrogen blanketing. The inert environment, which is preferred, should be free of oxygen.

Conducting the instant process at the critical relatively low temperatures causes the viscosity of the reaction mixture to increase, making it more difficult for the polyolefin/unsaturated mono- or dicarboxylic acid material reactant mixture to be homogeneous. It also becomes more difficult for the chlorine, generally introduced into the reaction mixture as a gas, to react uniformly with the viscous polymer leading to localized pockets of reaction which counteract the advantageous effects, described hereinbefore, of the instant process. Hence, a high total mixing energy is required to be able to obtain the benefits, particularly high conversion of the polyolefin, of the instant process. Therefore, the instant invention requires the introduction of chlorine gas, preferably into the lower portion of the liquid, initial reaction mixture containing polyolefin reactant and monounsaturated carboxylic reactant, while mixing or stirring the initial reaction mixture for a time and under conditions sufficient to provide substantial homogeneity of the reaction mixture and substantial chlorine gas dispersion throughout the reaction mixture. Such mixing should impart a total mixing energy to the liquid reaction mixture of at least 0.788 w/L (4 HP (horsepower)/1000 gal.) (e.g., in the range of from 0.985 to 5.91 w/L (5 to 30 HP/1000 gal.)), preferably at least 1.97 w/L (10 HP/1000 gal.), more preferably in the range of from 1.97 w/L to 5.91 w/L (10 to 30 HP/1000 gal.) and most prefereably from 1.97 w/L to 3.94 w/L (10 to 20 HP/1000 gal.) The "total mixing energy" is herein intended to refer to the sum of the mixing energy imparted to the liquid reaction mixture by each mixing means, that is impeller, gas or liquid sparger, fluid impact sparger, used.

Mixing force can be imparted to the reaction mixture by one or more mixing means, including ultrasonic mixers, impellers, gas spargers, liquid injectors, or fluid impact spargers. Gas sparging can employ chlorine gas and/or an inert gas (e.g. $N_2$). Liquid injectors can employ an inert liquid and/or one of the liquid reactants. Impact sparging can be accomplished by withdrawing a portion of the reaction liquid (e.g., from the upper portion of the reaction zone) and reintroducing the liquid via one or more injectors or nozzles into the reaction zone (e.g., into the lower portion of the reaction zone), together with gaseous chlorine, which can be admixed with the reintroduced liquid prior to, in or immediately after the injectors or nozzles,

thereby subjecting the gas to high shear conditions imparted by the high liquid velocities and providing high mixing energies to the reaction mixture.

Preferably, the mixing energy to the reaction mixture is provided by at least one impeller. For convenience, the "mixing energy" imparted to reaction liquids by impellers is herein intended to refer to the energy imparted to the liquid reaction mixture under no-gas conditions, that is in the absence of gas introduced.

Mixing energies (in units of horsepower per thousand gallons), can be determined for a given mixing device by conventional means, and for each impeller can be calculated from the equation:

$$(HP/1{,}000\ gal.) = \frac{P_W}{V} \qquad (I)$$

wherein "V" is the volume of the reaction liquid (in units of thousands of U.S. gallons) and "Pw" represents the power consumed by the impeller in units of horsepower and is calculated from the equation:

$$P_w = (2.62 \times 10^{-10})\ (N_p)\ (\rho)\ (N_i)^3\ (D_i)^5 \qquad (II)$$

wherein "$N_p$" is the power number for the impeller employed, "$\rho$" is the liquid's density (at 120 °C, in units of pounds per cubic foot), "$N_i$" is the impeller rotation speed under no-gas conditions (in units of revolutions per minute), "$D_i$"is the impeller diameter (in units of feet), and 2.62 x $10^{-10}$ is the conversion factor for these units.

The power number "$N_p$" for a given impeller in the reaction liquids of the present invention can be determined by conventional means. For example, the Nagata correlation (Shinji Nagata, Mixing-Principles and Applications, p. 32, Equation 1.50 (Halsted Press, N.Y., 1975)) can be employed for an unbaffled reactor, given the dimensions of the impeller, the density and viscosity of the particular reaction liquid employed and other factors. For commerical impellers, standard correlations (e.g. curves) exist from which "$N_p$" values can be derived, given the particular impeller used and the dimensionless Mixing Reynolds Number "$N_{Re}$" of the reactor, which can be determined from the equation:

$$N_{Re} = 24.8 \frac{(\rho)\ (N_i)(D_i)^2}{(\mu)} \qquad (III)$$

wherein "$\rho$", "$N_i$" and "$D_i$" are as defined above, "$\mu$" is the liquid viscosity (at 120 °C, in units of $gs^{-1}cm$-1- x $10^2$(centipoise)) and 24.8 is the conversion factor for these units.

For example, "$N_p$ values can be calculated for stirred tank reactors as described in D. S. Dickey et al., "Dimensional Analysis for Fluid Agitation Systems", Chemical Engineering, pages 139-145 (January 5, 1976), and in James Y. Oldshue, Fluid Mixing Technology (McGraw Hill 1983), see e.g. pp 43-71, Chapter 3, "Power Correlations and the Effects of Mixing Environment". Figure 2 hereof also provides $N_p$ v. $N_{Re}$ correlations for baffled stirred tank reactors employing any of the impellers identified for curves 1 to 7.

For the purposes of this invention, "$N_p$" determinations are made assuming each impeller is immersed in the liquid and further assuming a single phase liquid, under no-gas conditions, that is using the $N_{Re}$ and any liquid property parameters (viscosity and density at 120 °C) calculated on the assumption that the liquid contains only the high molecular polymer (e.g., polyisobutylene) to be charged for the reaction.

The degree of mixing in commercial stirred tank reactors can be increased by use of conventional baffles along the reactor walls, generally from 1 to 6 baffles, more usually from 3 to 5 baffles, (e.g. vertical or inclined (15° to 30°) flat plate baffles, vertical cylinders, etc.) each having a width of from about 2 to 15% of the inner tank diameter. Baffles generally will be spaced at equal distances about the tank's circumference (e.g. 4 baffles spaced 90° apart) and can be positioned with a clearance (e.g., of a distance equal to from 5 to 40% of the baffle's width) from the reactor's side wall.

The initial liquid reaction mixture, comprising the liquid polyolefin and monounsaturated carboxylic reactant charge, is preferably contacted at high total mixing energies in a reaction zone provided with a high shear zone, adapted for dispersion of gas bubbles in the liquid reaction mixture, and an axial gas pumping zone, adapted for recirculation of gas bubbles axially in the liquid reaction mixture, whereby the chlorine

gas is introduced into the liquid reaction mixture in the high shear zone. More preferably, the axial gas pumping zone comprises a downwardly gas pumping zone and is most preferably located above the high shear zone.

Reference is now made to Figure 1 wherein the same numbers refer to the same or similar elements. In Figure 1, one embodiment of the preferred reaction zones for effecting the process of this invention is illustrated, comprising a stirred tank reaction vessel 10 (having inside diameter "$D_r$) provided with internal side walls 12, a plurality (e.g. 3 to 5) of flat plate baffles 70 affixed to side walls 12, internal bottom surface 14, upper closure member 16 and upper closure member inner surface 15, defining reaction zone 20. Reactor 10 is provided with a high shear impeller means 45 (which in the embodiment illustrated comprises a disk fixed blade turbine (having 6 blades 44), and an axial pumping impeller means 43 (which in the illustrated embodiment comprises a downwardly pumping impeller having 6 45° pitched blades 42) which are rotatably affixed to a center shaft 40, positioned substantially along the vertical center axis 41 of reactor 10. Reactor 10 is provided with a polymer supply conduit 19 for feed of the polymer reactant, and reaction diluent or solvent, if employed, into the reaction zone 20, and with a product mixture withdrawal conduit 18 for withdrawing liquid reaction mixture from reactor 10.

Reactor 10 is also provided with monounsaturated carboxylic reactant injection means comprising a conduit 30, and with chlorine injection means, comprising conduit 50. Chlorine injection means 50 preferably is adapted to introduce gaseous chlorine into liquid reaction medium 20 below lower high shear impeller means 45. Preferably, carboxylic reactant introduction means 30 is adapted to introduce monounsaturated carboxylic reactant into reactor 10 above upper impeller means 43.

Conduits 50, 30, 19 and 18 are provided with conventional valve means for controlling the rate of the respective gas and liquid feeds and withdrawals. Reactor 10 can also be provided with an overhead vapor withdrawal conduit (not shown) for withdrawal of vapors from reactor 10 to an external condenser for partial or complete condensation of these vapors. A liquid recycle of a portion of such condensate as reflux to reaction zone 20 (via a reflux conduit, not shown) can be employed, if desired, for reaction liquid level and temperature control and to maximize utilization of the monounsatured carboxylic reactant.

The high shear impeller means 45 will generally comprise a dispersing turbine, and can employ flat blades or pitched blades (generally from 2 to 8 blades per impeller). Where pitched blades are employed, high shear impeller 45 will additionally perform either a downward or upward pumping (i.e. "axial" pumping) function, depending on the positioning of the pitch relative to the vertical and the direction in which the turbine is turned. High shear impeller means 45 preferably comprises a plurality of impeller blades 44 (six blades in the illustrated embodiment), which are substantially vertically positioned.

Axial pumping impeller means 43 can comprise a pitched blade or a propeller turbine, wherein such pitched blades can either be fixed or adjustable and wherein the angle of pitch can be constant or varied along the length of one or more such blades (e.g., as in a variable curve retreat curve blade turbine) or a draft tube circulator. Axial pumping impeller 43 will generally comprise from 3 to 8 impeller blades per impeller.

Preferably, axial pumping impeller means 43 comprises a downwardly pumping impeller means provided with impeller blades 42 (six blades in the illustrated embodiment) which are inclined (e.g. 30° to 45°) to the vertical, such that when rotated about axis 41 impeller blades 42 impart a downward pumping action to fluid (liquid and gas bubbles).

Most preferably, the axial pumping impellers are positioned above the high shear mixing zone. Gas bubbles 53 introduced into the reactor 10 are introduced into, or below, the high shear mixing zone (e.g. below impeller means 45) and thereby dispersed radially outwardly and made smaller by such dispersing action, counteracting the natural coalescence of these gas bubbles which occurs as they rise from their point of introduction into the liquid mass.

These turbines are known in the art (see, e.g., Oldshue, supra, at pp 58-63 and pp. 178-181) and need not be more completely described herein.

While in the illustrated embodiment, a single impeller is employed in each of the high shear and downward pumping zones, it will be understood that a plurality of impellers and/or fluid injectors can be employed in either, or both, such zones. Therefore, if desired, high shear impeller means 45 can comprise 2 or more turbines. Similarly, if desired, downward pumping impeller means 43 can comprise 2 or more turbines.

Preferably chlorine introduction means 50 is adapted to introduce chlorine gas at a point below the high shear impeller means 45 such that the chlorine introduction point, illustrated by 52 in Figure 1, is within the annulus formed by lower surface 14 of reactor 10, the outer periphery of turbine blades 45 and that distance from center axis 41 equal to one half the radius of impeller 45 (that is 1/4 of "$D_{t1}$" in Figure 1).

Preferably, the diameters of the first and second impellers 45 and 43, respectively, are substantially the same (that is $D_{t1} = D_{t2}$), although this is not critical and, for example, the $D_{t1}$ to $D_{t2}$ ratio can range from 0.5:1 to 2:1, more generally from 0.8:1 to 1.2:1). Preferably, $D_{t1}$ and $D_{t2}$ are each from about 30 to 70%, more preferably from 40 to 60%, and most preferably from 45 to 55%, of internal diameter $D_r$ of reactor 10.

The distance between upper and lower impellers 43 and 45 will generally comprise at least one reactor diameter, and more typically from 1 to 3 reactor diameters, for maximum benefit. Therefore, the distance $s_1$ will be generally from about $D_r$ to $3D_r$. (Figure 1 is not drawn to scale, and is for the purpose of illustrating the concepts herein.)

Preferably, liquid reaction mixture 20 (having a liquid height $H_r$), comprising the initial charge of polymer and maleic anhydride, is mixed employing the plural zone turbine apparatus immersed in the liquid to provide at least 10 liquid turnovers and more preferably from 10 to 100 liquid turnovers prior to the introduction of gaseous chlorine into the reactor. As used herein the "liquid turnover" is defined to be the number of times the total liquid reaction mixture theoretically completely circulates within the reactor 10 (given the reaction liquid volume and the pumping rate of the mixer(s)).

It has been found that the combination of high total mixing energy with plural zone mixing, wherein an upper mixing zone comprises at least one axial pumping zone, and preferably a downwardly pumping mixing zone, (employing, e.g., a pitched blade turbine or impeller turbine) and wherein the lower zone comprises a high shear zone (employing, e.g., at least one disk fixed blade turbine) enhances the percent high molecular weight polymer conversion, the polymer conversion efficiency, and the mole ratio of the monosubstituted to polysubstituted functionalized polymer at the low temperatures of operation which are employed in the process of this invention. The gas bubbles 53 introduced into the reactor 10 are introduced below high shear impeller 45 and dispersed radially outwardly and gas bubbles 53 are made smaller by such dispersing action, thereby counteracting the natural coalescence of these gas bubbles which occurs as they rise from their point of introduction into the liquid mass.

A particularly preferred mixing apparatus is one comprising the combination of disk fixed blade turbine (also known as a Rushton type impeller) and a downward pumping pitched blade or propeller impeller to provide sufficient energy dissipation to maximize mass transfer area and promote recirculation of chlorine gas bubbles.

The product mixtures prepared by the process of the present invention will preferably simultaneously possess (1) $f_m/f_d$ ratios of at least 2.5:1, more preferably at least 3.0:1 and most preferably at least 4:1 (e.g., from 4:1 to 15:1 or more), and (2) an AI of at least 70 wt%, more preferably at least about 80 wt% (e.g., from about 82 to 98 wt%), and most preferably at least about 84 wt% (e.g., from 85 to 90 wt%).

As used herein, the "$f_m/f_d$" ratio is defined to be the calculated weight ratio of the weight fraction ("$f_m$") of polymer chains in the product mixture which are substituted by one acid functional group (e.g. one succinic anhydride group when maleic anhydride is employed as reactant, or one propionic acid group when acrylic acid is employed as reactant) to the weight fraction ("$f_d$") of polymer chains in the product mixture which are substituted by two such acid functional groups. The $f_m/f_d$ ratios can be determined from the following equation (Eq. IV):

$$f_m/f_d = \frac{(0.02)(y)-(F)}{(F)-(0.01)(y)}$$

wherein "y" is the wt.% active ingredient (i.e. "AI") in the product mixture of the polymer substituted with at least one acid functional group and "F" is the functionality of the product mixture (that is, the mole ratio of the moles of acid functional groups in the product mixture to the moles of polymer used in the reaction). The functionality "F" can be calculated from the expression (Eq. V):

$$F = \frac{(\overline{M}_n) \times (\text{Sap. No.})}{[56,100 \times Z_1] - [\text{Sap. No.} \times (Z_2-2)]}$$

wherein $\overline{M}_n$ is the number average molecular weight of the polymer used, "Sap. No." is the saponification number of the product mixture (in units of mg.KOH/g., and determined by ASTM Method D-94), "$Z_1$" is 1 or

2 and is the number of carboxyl (-C(O)-) groups per molecule of monounsaturated carboxylic reactant used, and "$Z_2$" is the molecular weight of the monounsaturated carboxylic reactant used.

For example, when the polymer comprises polyisobutylene (PIB) and the monounsaturated carboxylic reactant comprises maleic anhydride, the $f_m/f_d$ ratio of the product mixture obtained in the formation of polyisobutylene substituted succinic anhydride (PIBSA), is determined by the expression (Eq. VI):

$$f_m/f_d = \frac{(0.02)(y_{SA}) - F_{SA}}{F_{SA} - (0.01)(y_{SA})}$$

wherein "$y_{SA}$" is the wt.% active ingredient (i.e., AI) in the product mixture of polymer substituted with succinic anhydride groups and $F_{SA}$ is the functionality of the product mixture (that is, the ratio of the succinic anhydride groups to the starting PIB) and is determined by the expression (Eq. VII):

$$F_{SA} = \frac{(\bar{M}_n) \times (\text{Sap. No.})}{(112{,}200) - [\text{Sap. No.} \times (98-2)]}$$

wherein $\overline{M}_n$ is the number average molecular weight of the PIB used in the formation of the product mixture and Sap. No. is the saponification number of the product mixture as defined above.

For purposes of simplifying the above calculations (Equations IV and V), no polymer chains having three or more such acid functional group substituents are considered to be present.

The wt.% active ingredient ("AI"), for a product mixture is calculated from the following equation (VIII):

$$AI = \frac{W_s - W_t}{W_s} \times 100$$

wherein $W_s$ is the weight of the product mixture sample, and $W_t$ is the weight of unfunctionalized polymer in the sample. The weight of unfunctionalized polymer is determined via a chromatographic technique. The unfunctionalized polymer component is separated from the functionalized polymer via column chromatography or high pressure liquid chromatography (HPLC), with a polar adsorbent such as FlorisilÅ Absorbent (U.S. Silica Company), alumina or silica using a non-polar hydrocarbon eluent such as hexane or cyclohexane. In the column chromatography technique, the unfunctionalized polymer is collected and its weight is determined. In the HPLC technique, the weight of unfunctionalized polymer is determined by a calibrated analytical detector, such as a refractive index detector. Care is taken to choose the sample, column size, and elution volume appropriately to achieve efficient separation. For example, use of 50 gms of FlorisilÅ Adsorbent, contained in a 2.5 cm x 50 cm glass column was found to be adequate to ensure separation for PIBSA product mixture sample sizes in the range of 0.1 to 5 gms using hexane as an eluent. Adequate separation is indicated by the appearance of a neat eluate fraction which succeeds the unfunctionalized polymer containing fraction. Infra-red spectroscopy (1700-1800 $cm^{-1}$ region) can be conveniently used to monitor the eluate to assure the absence therein of carbonyl containing species upon completion of the separation which species would indicate presence of functionalized polymer.

Preferably, the process of the present invention is characterized by a long-chain hydrocarbon polymer conversion efficiency ("CE") of at least about 75%, more preferably at least about 80% (e.g. from 81 to 95%, and most preferably at least about 83% (e.g. from 83 to 90%), wherein the conversion efficiency is determined by the equation (IX):

$$CE = \frac{AI}{F}$$

wherein "F" and "AI" are as defined above in Equations V and VIII, respectively. The process of this invention has been surprisingly found to form the desired products in high polymer conversion efficiencies, even at the low chlorination temperatures employed.

The term "AI Ratio" as used herein is intended to refer to the multiplication product obtained by multiplying the AI (wt.%) for a given product mixture times the $f_m/f_d$ ratio times 0.01. Therefore, the AI Ratio is a measure of the degree to which the given product mixture is concurrently characterized by a high AI and a high $f_m/f_d$ ratio, which is desired in the process of the present invention. The product mixtures prepared by the process of this invention should possess an AI Ratio of at least 2.0:1 (e.g. from 2.0:1 to 20:1 or higher), preferably at least 2.5:1 (e.g. from 2.5:1 to 20:1), more preferably at least 3.5:1, and most preferably at least 4.0:1 (e.g. from 4.0:1 to 15:1).

The product mixtures prepared by the process of this invention will be preferably also characterized by a content of sediment (i.e., insoluble by-product species which are suspended in the product mixture and which contribute to haze and/or color of the product mixture) of less than 0.05 vol%, preferably less than 0.03 vol%, and most preferably less than 0.01 vol% sediment, thereby greatly decreasing the equipment, manpower and environmental costs associated with the removal and disposal of the sediment from the product mixture. As used herein the volume % sediment in the product mixtures of the present invention is determined on a product mixture sample as withdrawn from the reaction zone, prior to filtration, or other sediment removal steps (while the product mixture is in a well mixed state) as follows: to 25 $cm^3$ of the sample is added 75 $cm^3$ heptane and the resulting mixture is placed in a graduated centrifuge tube which is then centrifuged at 1600 rpm for 20 minutes; the resulting sediment in the base of the centrifuge tube is then expressed in units of volume % sediment relative to the volume of the product mixture sample employed. Samples of the product mixture can be directly withdrawn from the reaction zone by a pipette, a liquid withdrawal conduit or other means.

The product mixtures prepared by the process of this invention will be generally characterized by a functionality "F" of less than about 1.25, e.g. from 0.6 to 1.2, and more typically from 0.7 to 1.15.

The process of this invention can also be employed to prepare low sediment product mixtures (e.g. polyisobutenyl-substituted succinic acid or anhydride product mixtures) having a functionality "F" of greater than about 1.3, e.g., from 1.3 to 3.0, more typically from 1.4 to 2.0, containing decreased amounts of polymer degradation by-products.

A particularly preferred embodiment of the instant invention is, therefore, a process comprising contacting at a temperature of from 60 to 220 °C, a reaction mixture comprising a polyolefin (preferably polybutene, having a number average molecular weight of at least about 1200, preferably at least about 1500, and more preferably from 1,700 to 4,000) and maleic anhydride with chlorine gas (preferably by continuously introducing chlorine gas into the lower portion of the reaction mixture) in an amount effective to provide from 0.95 - 1.25 moles of chlorine per mole of maleic anhydride whereby at least about 60 mol %, preferably at least about 70 mol%, and most preferably at least about 90 mol%, of the total chlorine charged is charged at a reaction mixture temperature of not greater than about 170 °C., and more preferably not greater than about 160 °C., while mixing the reaction mixture in the absence of an inert solvent at a total mixing energy of at least 0.788 w/L (4 HP/1000 gal.) (and more preferably at least 1.97 w/L (10 HP/1000 gal.)) and for a time sufficient to provide a polymer conversion efficiency of at least 84% and to form a product mixture having an AI of at least about 82 wt.% and containing less than about 0.05 vol.% sediment.

The long chain hydrocarbyl substituted mono- and dicarboxylic acid materials produced in accordance with the instant process may be used, per se, as additives for lubricating oils and fuels or as intermediates to provide additives such as dispersants for lubricating oils and fuels. Such dispersants, in lube oils, provide improved performance properties including enhanced diesel crankcase lubricant performance, improved deposit control, lube oil stability and enhanced resistance to oxidation.

The recovery of the product mixture containing the long chain hydrocarbyl substituted mono- or dicarboxylic acid materials produced by the process of this invention can be accomplished by means well known to those of skill in the art. Often, however, it is not necessary to recover the product if, for example, it is to be used as an intermediate for the formation of other additive products. In these instances, the reaction mixture can be further reacted with other reagents and reactants such as an alcohol, polyol, amine, polyamine, basically reacting metal compounds. Usually, however, when such further reactions are carried out with the original reaction mixture, it is generally blown with an inert gas such as nitrogen to remove any (unreacted chlorine, hydrogen chloride or unreacted unsaturated mono- or dicarboxylic acid reactant) that may be present. If desired, the product mixture may be filtered to remove sediment prior to further reactions.

Amine compounds useful as nucleophilic reactants for reaction with the hydrocarbyl substituted mono- and dicarboxylic acid materials are those containing at least two reactive amino groups, i.e., primary and secondary amino groups. They include polyalkylene polyamines of 2 to 60, preferably 2 to 40 (e.g. 3 to 20) total carbon atoms and 1 to 20, preferably 3 to 12, and most preferably 3 to 9 nitrogen atoms in the

molecule. These amines may be hydrocarbyl amines or may be hydrocarbyl amines including other groups, e.g, hydroxy groups, alkoxy groups, amide groups, nitriles and imidazoline groups. Hydroxy amines with 1 to 6 hydroxy groups, preferably 1 to 3 hydroxy groups are particularly useful. Preferred amines are aliphatic saturated amines, including those of the general formulas:

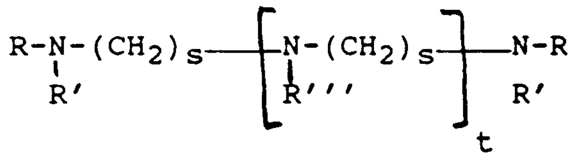

(I)

wherein R, R', R'' and R''' are independently selected from the group consisting of hydrogen; $C_1$ to $C_{25}$ straight or branched chain alkyl radicals; $C_1$ to $C_{12}$ alkoxy $C_2$ to $C_6$ alkylene radicals; $C_2$ to $C_{12}$ hydroxy amino alkylene radicals; and $C_1$ to $C_{12}$ alkylamino $C_2$ to $C_6$ alkylene radicals; and wherein R''' can additionally comprise a moiety of the formula:

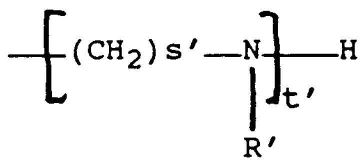

(II)

wherein R' is as defined above, and wherein s and s' can be the same or a different number of from 2 to 6, preferably 2 to 4; and t and t' can be the same or different and are numbers of from 0 to 10, preferably 2 to 7, and most preferably 3 to 7, with the proviso that the sum of t and t' is not greater than 15. To assure a facile reaction, it is preferred that R, R', R'', R''', s, s', t and t' be selected in a manner sufficient to provide the compounds of Formula I with typically at least one primary or secondary amine group, preferably at least two primary or secondary amine groups. This can be achieved by selecting at least one of said R, R', R'' or R''' groups to be hydrogen or by letting t in Formula I be at least one when R''', is H or when the II moiety possesses a secondary amino group. The most preferred amine of the above formulas are represented by Formula I and contain at least two primary amine groups and at least one, and preferably at least three, secondary amine groups.

Examples of suitable amine compounds include: 1,2-diaminoethane; 1,3-diaminopropane; 1,4-diaminobutane; 1,6-diaminohexane; polyethylene amines such as diethylene triamine; triethylene tetramine; tetraethylene pentamine; polypropylene amines such as 1,2-propylene diamine; di-(1,2-propylene)triamine; di-(1,3-propylene)triamine; N,N-dimethyl-1,3-diaminopropane; N,N-di-(2-aminoethyl) ethylene diamine; N,N-di(2-hydroxyethyl)-1,3-propylene diamine; 3-dodecyloxypropylamine; N-dodecyl-1,3-propane diamine; tris hydroxymethylaminomethane (THAM); diisopropanol amine: diethanol amine; triethanol amine; mono-, di-, and tri-tallow amines; amino morpholines such as N-(3-aminopropyl)morpholine; and mixtures thereof.

Other useful amine compounds include: alicyclic diamines such as 1,4-di(aminomethyl) cyclohexane, and heterocyclic nitrogen compounds such as imidazolines, and N-aminoalkyl piperazines of the general formula (III):

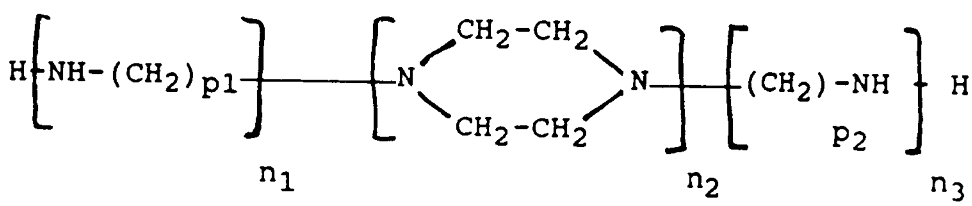

wherein $p_1$ and $p_2$ are the same or different and are each integers of from 1 to 4, and $n_1$, $n_2$ and $n_3$ are the same or different and are each integers of from 1 to 3. Non-limiting examples of such amines include 2-pentadecyl imidazoline; N-(2-aminoethyl) piperazine. Commercial mixtures of amine compounds may advantageously be used. For example, one process for preparing alkylene amines involves the reaction of an alkylene dihalide (such as ethylene dichloride or propylene dichloride) with ammonia, which results in a complex mixture of alkylene amines wherein pairs of nitrogens are joined by alkylene groups, forming such compounds as diethylene triamine, triethylenetetramine, tetraethylene pentamine and isomeric piperazines. Low cost poly(ethyleneamines) compounds averaging 5 to 7 nitrogen atoms per molecule are available commercially under trade names such as "Polyamine H", "Polyamine 400", "Dow Polyamine E-100", etc.

Useful amines also include polyoxyalkylene polyamines such as those of the formulae:

$$NH_2 \text{---alkylene---} \left( \text{O-alkylene} \right)_m \text{---} NH_2 \quad \text{(IV)}$$

where m has a value of 3 to 70 and preferably 10 to 35; and

$$R \left( \text{alkylene---} \left( \text{O-alkylene} \right)_n \text{---} NH_2 \right)_a \quad \text{(V)}$$

where "n" has a value of 1 to 40 with the provision that the sum of all the n's is from 3 to 70 and preferably from 6 to 35, and R is a polyvalent saturated hydrocarbon radical of up to ten carbon atoms wherein the number of substituents on the R group is represented by the value of "a", which is a number of from 3 to 6. The alkylene groups in either formula (IV) or (V) may be straight or branched chains containing 2 to 7, and preferably 2 to 4 carbon atoms.

The polyoxyalkylene polyamines of formulas (IV) or (V) above, preferably polyoxyalkylene diamines and polyoxyalkylene triamines, may have average molecular weights ranging from 200 to 4000 and preferably from 400 to 2000. The preferred polyoxyalkylene polyoxyalkylene polyamines include the polyoxyethylene and polyoxypropylene diamines and the polyoxypropylene triamines having average molecular weights ranging from 200 to 2000. The polyoxyalkylene polyamines are commercially available and may be obtained, for example, from the Jefferson Chemical Company, Inc. under the trade name "Jeffamines D-230, D-400, D-1000, D-2000, T-403", etc.

Additional amines useful in the present invention are described in U.S. Patent 3,445,441.

A particularly useful class of amines are the polyamido and related amines disclosed in co-pending Serial No. 126,405, filed November 30, 1987, which comprise reaction products of a polyamine and an alpha, beta unsaturated compound of the formula:

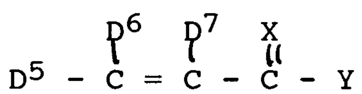

(VI)

wherein X is sulfur or oxygen, Y is $-OD^8$, $-SD^8$, or $-ND^8(D^9)$, and $D^5$, $D^6$, $D^7$, $D^8$ and $D^9$ are the same or different and are hydrogen or substituted or unsubstituted hydrocarbyl. Any polyamine, whether aliphatic, cycloaliphatic, aromatic, heterocyclic, can be employed provided it is capable of adding across the acrylic double bond and amidifying with for example the carbonyl group (-C(O)-) of the acrylate-type compound of formula VI, or with the thiocarbonyl group (-C(S)-) of the thioacrylate-type compound of formula VI.

The amine is readily reacted with the mono- or dicarboxylic acid material, e.g. alkenyl succinic anhydride, by heating an oil solution containing 5 to 95 wt. % of mono- or dicarboxylic acid material to 100 to 200 °C., preferably 125 to 175 °C., generally for 1 to 10, e.g. 2 to 6 hours until the desired amount of water is removed. The heating is preferably carried out to favor formation of imides or mixtures of imides and amides, rather than amides and salts. Reaction ratios of mono- or dicarboxylic acid material to equivalents of amine as well as the other nucleophilic reactants described herein can vary considerably, depending upon the reactants and type of bonds formed. Generally from 0.1 to 1.0, preferably 0.2 to 0.6, e.g. 0.4 to 0.6, moles of mono- or dicarboxylic acid moiety content (e.g. grafted maleic anhydride content)

is used, per equivalent of nucleophilic reactant, e.g. amine. For example, about 0.5 mole of a pentamine (having two primary amino groups and 5 equivalents of nitrogen per molecule) is preferably used to convert into a mixture of amides and imides, the product formed by reacting one mole of olefin with sufficient maleic anhydride to add 1.0 moles of succinic anhydride groups per mole of olefin, i.e. preferably the pentamine is used in an amount sufficient to provide about 0.4 mole (that is 1.0/[0.5x5] mole) of succinic anhydride moiety per nitrogen equivalent of the amine.

Tris(hydroxymethyl) amino methane (THAM) can be reacted with the aforesaid acid material to form amides, imides or ester type additives as taught by U.K. 984,409, or to form oxazoline compounds and borated oxazoline compounds as described, for example, in U.S. 4,102,798; 4,116,876 and 4,113,639.

The adducts may also be esters derived from the aforesaid long chain hydrocarbon substituted mono- or dicarboxylic acid material and from hydroxy compounds such as monohydric and polyhydric alcohols or aromatic compounds such as phenols and naphthols. The polyhydric alcohols are the most preferred hydroxy compounds. Suitable polyol compounds which can be used include aliphatic polyhydric alcohols containing up to 100 carbon atoms and 2 to 10 hydroxyl groups. These alcohols can be quite diverse in structure and chemical composition, for example, they can be substituted or unsubstituted, hindered or unhindered, branched chain or straight chain as desired. Typical alcohols are alkylene glycols such as ethylene glycol, propylene glycol, trimethylene glycol, butylene glycol, and polyglycol such as diethylene glycol, triethylene glycol, tetraethylene glycol, dipropylene glycol, tripropylene glycol, dibutylene glycol, tributylene glycol, and other alkylene glycols and polyalkylene glycols in which the alkylene radical contains from two to about eight carbon atoms. Other useful polyhydric alcohols include glycerol, monomethyl ether of glycerol, pentaerythritol, dipentaerythritol, tripentaerythritol, 9,10-dihydroxystearic acid, the ethyl ester of 9,10-dihydroxystearic acid, 3-chloro-1, 2-propanediol, 1,2-butanediol, 1,4-butanediol, 2,3-hexanediol, pinacol, tetrahydroxy pentane, erythritol, arabitol, sorbitol, mannitol, 1,2-cyclohexanediol, 1,4-cyclohexanediol, 1,4-(2-hydroxyethyl)-cyclohexane, 1,4-dihydroxy-2-nitrobutane, 1,4-di-(2-hydroxyethyl)-benzene, the carbohydrates such as glucose, rhamnose, mannose, glyceraldehyde, and galactose, amino alcohols such as di-(2-hydroxyethyl) amine, tri-(3 hydroxypropyl) amine, N,N,-di-(hydroxyethyl) ethylenediamine, copolymer of allyl alcohol and styrene, N,N-di-(2-hydroxylethyl) glycine and esters thereof with lower mono-and polyhydric aliphatic alcohols.

Included within the group of aliphatic alcohols are those alkane polyols which contain ether groups such as polyethylene oxide repeating units, as well as those polyhydric alcohols containing at least three hydroxyl groups, at least one of which has been esterified with a mono-carboxylic acid having from eight to about 30 carbon atoms such as octanoic acid, oleic acid, stearic acid, linoleic acid, dodecanoic acid, or tall oil acid. Examples of such partially esterified polyhydric alcohols are the mono-oleate of sorbitol, the mono-oleate of glycerol, the mono-stearate of glycerol, the di-stearate of sorbitol, and the di-dodecanoate of erythritol.

A preferred class of ester containing adducts are those prepared from aliphatic alcohols containing up to 20 carbon atoms, and especially those containing three to 15 carbon atoms. This class of alcohols includes glycerol, erythritol, pentaerythritol, dipentaerythritol, tripentaerythritol, gluconic acid, glyceraldehyde, glucose, arabinose, 1,7-heptanediol, 2,4-heptanediol, 1,2,3-hexanetriol, 1,2,4-hexanetriol, 1,2,5-hexanetriol, 2,3,4-hexanetriol, 1,2,3-butanetriol, 1,2,4-butanetriol, quinic acid, 2,2,6,6-tetrakis(hydroxymethyl)-cyclohexanol, 1,10-decanediol and digitalose. The esters prepared from aliphatic alcohols containing at least three hydroxyl groups and up to fifteen carbon atoms are particularly preferred.

An especially preferred class of polyhydric alcohols for preparing the ester adducts used as starting materials in the present invention are the polyhydric alkanols containing 3 to 15, especially 3 to 6 carbon atoms and having at least 3 hydroxyl groups. Such alcohols are exemplified in the above specifically identified alcohols and are represented by glycerol, erythritol, pentaerythritol, mannitol, sorbitol, 1,2,4-hexanetriol, and tetrahydroxy pentane.

The ester adducts may be di-esters of succinic acids or acidic esters, i.e., partially esterified succinic acids; as well as partially esterified polyhydric alcohols or phenols, i.e., esters having free alcohols or phenolic hydroxyl radicals. Mixtures of the above illustrated esters likewise are contemplated within the scope of this invention.

The ester adduct may be prepared by one of several known methods as illustrated for example in U.S. Patent 3, 381,022. The ester adduct may also be borated, similar to the nitrogen containing adduct, as described herein.

Hydroxyamines which can be reacted with the aforesaid long chain hydrocarbon substituted mono- or dicarboxylic acid material to form adducts include 2-amino-2-methyl-1-propanol, p-(beta-hydroxyethyl)-aniline, 2-amino-1-propanol, 3-amino-1-propanol, 2-amino-2-methyl-1,3-propane-diol, 2-amino-2-ethyl-1,3-propanediol, N-(beta-hydroxypropyl)-N′-(beta-amino-ethyl)piperazine, tris(hydrocymethyl)amino-methane

(also known as trismethylolaminomethane), 2-amino-1-butanol, ethanolamine, diethanolamine, triethanolamine and beta-(beta-hydroxy ethoxy)-ethylamine. Mixtures of these or similar amines can also be employed. The above description of nucleophilic reactants suitable for reaction with the hydrocarbyl substituted mono- or dicarboxylic acid or anhydride includes amines, alcohols, and compounds of mixed amine and hydroxy containing reactive functional groups, i.e. amino-alcohols.

Further aspects of the present invention reside in the formation of metal complexes and other post-treatment derivatives, e.g., borated derivatives, of the novel additives prepared in accordance with this invention. Suitable metal complexes may be formed in accordance with known techniques of employing a reactive metal ion species during or after the formation of the present dispersant materials. Complex-forming metal reactants include the nitrates, thiocyanates, halides, carboxylates, phosphates, thio-phosphates, sulfates, and borates of transition metals such as iron, cobalt, nickel, copper, chromium, manganese, molybdenum, tungsten, ruthenium, palladium, platinum, cadmium, lead, silver, mercury and antimony. Prior art disclosures of these complexing reactions may be found in U.S. Patents 3,306,908 and Re. 26,443.

Post-treatment compositions include those formed by reacting the novel additives of the present invention with one or more post-treating reagents, usually selected from the group consisting of boron oxide, boron oxide hydrate, boron halides, boron acids, sulfur, sulfur chlorides, phosphorous sulfides and oxides, carboxylic acid or anhydride acylating agents, epoxides and episulfides and acrylonitriles. The reaction of such post-treating agents with the novel additives of this invention is carried out using procedures known in the art. For example, boration may be accomplished in accordance with the teachings of U.S. Patent 3,254,025 by treating the additive compound of the present invention with a boron oxide, halide, ester or acid. Treatment may be carried out by adding about 1-3 wt. % of the boron compound, preferably boric acid, and heating and stirring the reaction mixture at 135 °C to 165 °C for 1 to 5 hours followed by nitrogen stripping and filtration, if desired. Mineral oil or inert organic solvents facilitate the process.

The compositions produced in accordance with the present invention have been found to be particularly useful as fuel and lubricating oil additives.

When the compositions of this invention are used in normally liquid petroleum fuels, such as middle distillates boiling from 51 °C to 413 °C (150 ° to 800 °F.) including kerosene, diesel fuels, home heating fuel oil, jet fuels, a concentration of the additive in the fuel in the range of typically from 0.001 wt. % to 0.5 wt. %, preferably 0.005 wt. % to 0.2 wt. %, based on the total weight of the composition, will usually be employed. These additives can contribute fuel stability as well as dispersant activity and/or varnish control behavior to the fuel.

The compounds of this invention find their primary utility, however, in lubricating oil compositions, which employ a base oil in which the additives are dissolved or dispersed. Such base oils may be natural or synthetic.

Thus, base oils suitable for use in preparing the lubricating compositions of the present invention include those conventionally employed as crankcase lubricating oils for spark-ignited and compression-ignited internal combustion engines, such as automobile and truck engines, marine and railroad diesel engines. Advantageous results are also achieved by employing the additives of the present invention in base oils conventionally employed in and/or adapted for use as power transmitting fluids such as automatic transmission fluids, tractor fluids, universal tractor fluids and hydraulic fluids, heavy duty hydraulic fluids and power steering fluids. Gear lubricants, industrial oils, pump oils and other lubricating oil compositions can also benefit from the incorporation therein of the additives of the present invention.

Thus, the additives of the present invention may be suitably incorporated into synthetic base oils such as alkyl esters of dicarboxylic acids, polyglycols and alcohols; polyalpha-olefins, polybutenes, alkyl benzenes, organic esters of phosphoric acids, polysilicone oils selected type of lubricating oil composition can be included as desired.

The additives of this invention are oil-soluble, dissolvable in oil with the aid of a suitable solvent, or are stably dispersible materials. Oil-soluble, dissolvable, or stably dispersible as that terminology is used herein does not necessarily indicate that the materials are soluble, dissolvable, miscible, or capable of being suspended in oil in all proportions. It does mean, however, that the additives, for instance, are soluble or stably dispersible in oil to an extent sufficient to exert their intended effect in the environment in which the oil is employed. Moreover, the additional incorporation of other additives may also permit incorporation of higher levels of a particular polymer adduct hereof, if desired.

Accordingly, while any dispersant effective amount of these additives can be incorporated into the fully formulated lubricating oil composition, it is contemplated that such effective amount be sufficient to provide said lube oil composition with an amount of the additive of typically from 0.01 to about 10, e.g., 0.1 to 6.0,

and preferably from 0.25 to 3.0 wt. %, based on the weight of said composition.

The additives of the present invention can be incorporated into the lubricating oil in any convenient way. Thus, they can be added directly to the oil by dispersing, or dissolving the same in the oil at the desired level of concentration, typically with the aid of a suitable solvent such as toluene, cyclohexane, or tetrahydrofuran. Such blending can occur at room temperature or elevated.

Natural base oils include mineral lubricating oils which may vary widely as to their crude source, e.g., whether paraffinic, naphthenic, mixed and paraffinic-naphthenic; as well as to their formation, e.g., distillation range, straight run or cracked, hydrofined and solvent extracted.

More specifically, the natural lubricating oil base stocks which can be used in the compositions of this invention may be straight mineral lubricating oil or distillates derived from paraffinic, naphthenic, asphaltic, or mixed base crudes, or, if desired, various blends oils may be employed as well as residuals, particularly those from which asphaltic constituents have been removed. The oils may be refined by conventional methods using acid, alkali, and/or clay or other agents such as aluminum chloride, or they may be extracted oils produced, for example, by solvent extraction with solvents of the type of phenol, sulfur dioxide, furfural, dichlorodiethyl ether, nitrobenzene, crotonaldehyde.

The lubricating oil base stock conveniently has a viscosity of typically 2.5 to 12, and preferably 2.5 to 9 $cm^2\ s1^{-1} \times 10^2$ (cSt.) at 100 °C.

Thus, the additives of the present invention can be employed in a lubricating oil composition which comprises lubricating oil, typically in a major amount, and the additive, typically in a minor amount, which is effective to impart enhanced dispersancy relative to the absence of the additive. Additional conventional additives selected to meet the particular requirements of a temperatures. In this form the additive per se is thus being utilized as a 100% active ingredient form which can be added to the oil or fuel formulation by the purchaser. Alternatively, these additives may be blended with suitable oil-soluble solvent and base oil to form concentrate, which may then be blended with a lubricating oil base stock to obtain the final formulation. Concentrates will typically contain from 2 to 80 wt. %, preferably from 10 to 60 wt.%, and more preferably from 5 to 40% wt.% of the additive.

The lubricating oil base stock for the additive of the present invention typically is adapted to perform selected function by the incorporation of additives therein to form lubricating oil compositions (i.e., formulations).

Representative additives typically present in such formulations include viscosity modifiers, corrosion inhibitors, oxidation inhibitors, friction modifiers, other dispersants, anti-foaming agents, anti-wear agents, pour point depressants, detergents and rust inhibitors.

In the following experiments, all parts and percentages are on a weight basis unless otherwise indicated. Molecular weights are number average molecular weights. "PIB" refers to polyisobutylene, and "PIBSA" refers to product mixture containing polyisobutylene substituted with succinic anhydride groups. In the Runs that follow, the AI is determined by calculation from the weight of unfunctionalized polyisobutylene polymer which is determined in the product mixture of each Run. The Saponification Numbers (Sap. No.) are reported in units of mg KOH per g and are determined by hydrolyzing the anhydride groups in the PIBSA product mixture to the acid moiety, and reacting the resulting carboxyl groups with KOH according to ASTM Method D-94. The F values, $f_m/f_d$ ratios, AI ratios and polymer conversion efficiencies (CE) are determined as described above.

RUN 1

Into a non-baffled stirred tank lab reactor (equipped with a non-refluxing overhead condenser) are charged 2,800 parts of polybutene ($\bar{M}_w/\bar{M}_n$ = 2.5) having a number average molecular weight of 2,225 and 170 parts of maleic anhydride. The resultant reaction mixture is heated to 120 °C. with stirring at a total mixing energy of 2.758 w/L (14 HP/1000 gal). Thereafter, the stirring is continued and the reaction mixture is heated as follows: heat at an even rate from 120 to 220 °C over 2 hours; and hold at 220 °C for 5 hours (for a total reaction time of 7 hours). Into the stirred reaction mixture is continuously charged 134.7 parts of chlorine at an uniform rate over a period of 6 hours, with the chlorine charge being begun when the reaction mixture temperature has reached 120 °C, such that about 15 mole % of the total chlorine charge is introduced at a temperature of not greater than about 170 °C., and about 10 mol % of the total chlorine charge is introduced at a temperature of not greater than 150 °C. One hour after the chlorine charge is completed, the reaction mixture is sparged with gaseous nitrogen at 220 °C for 1.5 hours.

Run 2

The procedure of Run 1 is repeated except that the reaction temperature is increased from 120 to 220 °C over a period of 4 hours, such that about 30 mole % of the total chlorine charge is introduced at a temperature of not greater than about 170 °C, and about 15 mole % is introduced at 150 °C or below.

Run 3

The procedure of Run 1 is repeated except that the the reaction mixture is heated employing the following temperature profile: heat at an even rate from 120 to 150 °C over 1 hour; hold at 150 °C for one-half hour; heat to 170 °C over one-half hour; hold at 170 °C for 2 hours; heat to 220 °C over 3 hours; hold at 220 °C for 0.5 hour, for a total reaction time of 7.5 hours. Again, the chlorine charge is begun when the reaction mixture temperature reaches 120 °C. 1.5 hours after the chlorine charge is completed, the reaction mixture is sparged with gaseous nitrogen at 220 °C for 1.5 hours. Therefore, about 70 mole % of the total chlorine charge is introduced at a temperature of not greater than about 170 °C, and about 25 mole % of the total chlorine charge is introduced at a temperature of not greater than about 150 °C.

Run 4

The procedure of Run 3 is repeated except that the following temperature profile is used: heat at an even ratio from 120 to 150 °C over 1 hour; hold at 150 °C for one-half hour; heat at an even rate to 170 °C over one-half hour; hold at 170 °C for 4 hours; heat to 220 °C over 2 hours; hold at 220 °C for 2 hours, for a total reaction time of 8.5 hours. 2.5 Hours after the chlorine charge is completed, the reaction mixture is sparged with gaseous nitrogen at 220 °C for 1.5 hours. Therefore, 100 mole % of the total chlorine charge is introduced at a temperature of not greater than about 170 °C, and about 25 mole % of the total chlorine charge is introduced at a temperature of not greater than about 150 °C.

The data obtained in Runs 1-4 are summarized in Table I below.

TABLE I

| Run No. | Mole% $Cl_2$ < 170 °C | Sap. No.* | A.I. (Wt.%) | F* | Conv. Eff. | $f_m/f_d$ ratio* | Sediment (Vol. %)* | Al Ratio* |
|---|---|---|---|---|---|---|---|---|
| 1 | 15 | 55.5 | 78.2 | 1.15 | 68 | 1.12 | 0.88 | 0.88 |
| 2 | 33 | 52.0 | 75.0 | 1.08 | 69 | 1.27 | 0.68 | 0.95 |
| 3 | 70 | 48.5 | 80.0 | 1.01 | 79 | 2.80 | 0.20 | 2.24 |
| 4 | 100 | 49.5 | 80.6 | 1.03 | 78 | 2.59 | 0.28 | 2.09 |

*Reported data, for each Run, represents the average of two experiments at the indicated conditions.

The data in Table I show that as the percent of the total chlorine, introduced at 170 °C or below (herein termed "low temperature chlorine charge" for convenience) is increased from 15 mol% to 33 mol%, and still further to 70 mole %, at these high total mixing conditions, an appreciable increase in the conversion efficiency, the $f_m/f_d$ ratio, and the wt.% active ingredient is observed. The decrease in the wt.% active ingredients (75.0% in Run 2 vs. 78.2% in Run 1), observed in increasing the low temperature chlorine charge to 33 mol% from 15 mol%, is surprisingly reversed as the low temperature chlorine charge is increased still further to 70-100 mol%. Active ingredient concentrations of 80-81% are observed in Runs 3-4.

Further, as the percent of such low temperature chlorine charge is increased from 15 to 70 mole %, the quantity of sediment by-product produced decreases. It should be noted that more maleic anhydride has reacted in Runs 1-2 than in Runs 3-4, resulting in higher Sap. Nos. for Runs 1-2, despite the lower polyisobutylene conversion efficiencies in Runs 1-2. This indicates that the products of Runs 1-2 contain more of the polyfunctional species of the long chain hydrocarbyl substituted dicarboxylic acid material than the products of Runs 3-4. Though high maleic anhydride conversions are generally desirable, they are not critical because the volatility of maleic anhydride allows unreacted maleic anhydride to be easily removed from the reaction product mixture. On the other hand, polyisobutylene unfunctionalized (with maleic anhydride) cannot be practically separated from the reaction product mixture, and it is therefore incorporated and remains part of the final product sometimes adversely impacting its properties, e.g., viscometrics and economics. Furthermore, at equivalent Sap. Nos., the differences between the products produced by the process of Runs 1-2 and Runs 3-4 would be further magnified.

Run 5

Into a non-baffled stirred tank lab reactor equipped with a non-refluxing overhead condenser is charged 1,000 parts of polyisobutylene having a number average molecular weight of 2,214 and 66.2 parts of maleic anhydride. The resulting reaction mixture is thoroughly mixed with a total mixing energy of 1.182 w/L (6 HP/1,000 gallons). The reaction mixtures heated employing the following temperature profile: heat at an even rate from 120 to 220 °C over 4 hours; hold at 220 °C for 3 hours; and nitrogen strip at 220 °C for 1.5 hours, for total reaction time of 8.5 hours. Into the stirred reaction mixture is continuously charged 54.5 parts of chlorine at a uniform rate over a period of six hours, with the chlorine charge being begun when the reaction mixture temperature has reached 120 °C, such that about 17 mole % of the total chlorine charge is introduced at a temperature of not greater than about 170 °C.

Run 6

The procedure of Run 5 is repeated except that 60.7 parts of maleic anhydride and 48.1 parts of chlorine are used, and the reaction temperature profile is as follows: heat at an even rate from 120-145 °C over one hour; hold at 145 °C for one-half hour; heat at an even rate from 145 °C to 170 °C over one-half hour; hold at 170 °C for two hours; heat at an even rate from 170-220 °C over three hours; hold at 220 °C for one-half hour; and nitrogen strip at 220 °C for 1.5 hours, for total reaction time of nine hours. Therefore, about 33 mole % of the total chlorine charge is introduced at a temperature of not greater than about 170 °C.

Run 7

The procedure of Run 5 is repeated except that the reaction temperature profile is as follows: heat at an even rate from 120 to 220 °C over 2 hours; hold at 220 °C for 5 hours; and nitrogen strip at 220 °C for 1.5 hours, for total reaction time of 8.5 hours. Therefore, about 67 mole % of the total chlorine charge is introduced at a temperature of not greater than about 170 °C.

Run 8

The procedure of Run 5 is repeated except that the following temperature profile is employed: heat at an even rate from 120-145 °C over one hour; hold at 145 °C for one-half hour; heat at an even rate from 145 °C to 170 °C over one-half hour; hold at 170 °C for four hours; heat at an even rate from 170-220 °C over two hours; hold at 220 °C for one-half hour; and nitrogen strip at 220 °C for 1.5 hours, for total reaction time of 10 hours. Therefore, about 100 mole % of the total chlorine charge is introduced at a temperature of not greater than about 170 °C.

The product mixtures of in Runs 5 - 8 are characterized and the data thereby obtained are summarized in Table II below:

TABLE II

| Run No. | Mole% $Cl_2$ < 170 °C | Sap. No. | A.I. (Wt.%) | F | Conv. Eff. | $f_m/f_d$ ratio | Sediment (Vol. %) | AI Ratio |
|---|---|---|---|---|---|---|---|---|
| 5 | 17 | 49.3 | 79.8 | 1.02 | 78 | 2.59 | 0.5 | 2.07 |
| 6 | 33 | 44.5 | 74.5 | 0.92 | 81 | 3.25 | 0.6 | 2.42 |
| 7 | 67 | 48 | 81.6 | 0.99 | 82 | 3.68 | 0.15 | 3.01 |
| 8 | 100 | 44 | 81.3 | 0.91 | 89 | 7.28 | 0.12 | 6.00 |

As in Table I, the data of Table II show that as the low temperature chlorine charge is increased from 17 mol% or 33 mol% to 67 mol% or 100 mol%, at these high total mixing energy conditions, a significant increase in conversion efficiency, wt% active ingredient, $f_m/f_d$ ratio and AI Ratio results, and a significant decrease in the sediment formed is also obtained. Again, as in Table I, a decrease in the wt% active

ingredient concentration is observed (74.5% in Run 6 vs. 79.8% in Run 5) as the low temperature chlorine charge is increased from 17 to 33 mol%. Improved, high wt% active ingredient concentrations (81.3-81.6%) are obtained in Runs 7 and 8 in which the low temperature chlorine charge is 67 and 100 mol%, respectively.

Runs 9-11

Into a large baffled wall stirred tank reactor, provided with a partial reflux overhead condenser, in a series of runs is charged 18,160 parts of polyisobutylene having a number average molecular weight of 2,225 and 320 parts of maleic anhydride. The resultant reaction mixture is thoroughly mixed with a mixing energy of 1.97 w/L (10 HP/1000 gal.) employing a dual flight retreat blade stirrer, comprising an upper retreat blade impeller and a lower retreat blade impeller. The temperature of the reaction mixture is increased at an even rate over a period of 6 hours from 120°C to 220°C (i.e., the heat-up period) and held at 220°C for 1 hour. The reaction mixture is then nitrogen stripped for 2 hours. An additional 740 parts of maleic anhydride is charged at a uniform rate to the reaction mixture over the first 2 hours of the heat-up period. 898 parts of gaseous chlorine is continuously charged to the reaction mixture at a uniform rate during the first 5 hours of the heat-up period such that about 60 mole % of the total chlorine charged is added to the stirred reaction mixture at a temperature of not greater than about 170°C.

Runs 12-13

The procedure of Run 9 is repeated in two runs except that the reactor comprises a large baffled wall stirred tank reactor provided with a partial reflux overhead condenser and equipped with a dual flight vertical flat blade turbine (comprising an upper vertical flat blade impeller and a lower vertical flat blade impeller), and the total mixing energy is 2.167 w/L (11 HP/1000 gal.)

Run 14

The procedure of Run 9 is repeated except that the reactor employs a dual zone stirrer (an upper pitched blade turbine and a lower disk flat blade turbine) to provide an upper axial pumping zone and a lower high shear zone at a total mixing energy of 3.546 w/L (18 HP/1000 gals.), and except that the total maleic anhydride and chlorine charges are adjusted to provide a maleic anhydride:PIB mole ratio of 1.11:1 and a $Cl_2$:maleic anhydride mole ratio of 1.27:1.

Run 15

The procedure of Run 14 is repeated.

Run 16

The procedure of Run 14 is repeated except that the total mixing energy is 2.955 w/L (15 HP/1000 gal.)

The product mixtures of Runs 9 - 16 are analyzed, and the results thereby obtained are summarized in Table III below:

TABLE III

| Run No. | Mole% $Cl_2$ < 170°C | Sap. No. | A.I (Wt.%) | F | Conv. Eff. | $f_m/f_d$ ratio | Sediment (Vol. %) | AI Ratio |
|---|---|---|---|---|---|---|---|---|
| 9 | 60 | 48.5 | 75.2 | 1.00 | 75 | 2.01 | 0.15 | 1.51 |
| 10 | 60 | 47.6 | 73.7 | 0.98 | 74 | 1.98 | -- | 1.46 |
| 11 | 60 | 47.7 | 75.6 | 0.98 | 76 | 2.29 | -- | 1.73 |
| 12 | 60 | 48.0 | 80.5 | 0.99 | 80 | 3.28 | 0.01 | 2.63 |
| 13 | 60 | 49.0 | 79.5 | 1.01 | 80 | 2.65 | -- | 2.11 |
| 14 | 80 | 45.5 | 83.3 | 0.94 | 89 | 6.8 | 0.02 | 5.6 |
| 15 | 80 | 47.8 | 83.8 | 0.99 | 85 | 4.5 | 0.02 | 3.8 |
| 16 | 80 | 48.7 | 86.7 | 1.01 | 86 | 5.1 | 0.02 | 4.4 |

As illustrated by the data in Table III for Runs 9-13, at constant low temperature chlorine charge conditions, increasing the high total mixing energy results in increased polymer conversion efficiencies, AI and $f_m/f_d$ ratios, and hence in the AI Ratio factors.

Further, in comparing Runs 14-16, it can be seen that the use of dual zone high total mixing energy stirring in combination with low chlorination temperatures achieved still higher wt.% active ingredient concentrations, higher polymer conversion efficiencies, higher $f_m/f_d$ ratios and higher AI Ratios, without sacrificing the low sediment levels obtained in Run 12.

Run 17

Into a baffled stirred tank pilot plant reactor vessel equipped with a partial reflux overhead condenser are charged 544 parts of polyisobutylene having a number average molecular weight of 2225 and 30 parts of maleic anhydride. The resultant reaction mixture is thoroughly mixed using a single disk flat blade turbine with a total mixing energy of 3.349 w/L (17 HP/1000 gal.) The temperature of the reaction mixture is increased at an even rate over a period of 5 hours from 120 °C. to 220 °C. and held at 220 °C. for one hour. Then, the reaction mixture is sparged with nitrogen for 1.5 hours to remove unreacted maleic anhydride. During the 5 hours of increasing the temperature from 120 °C. to 220 °C., and the one hour soak period at 220 °C., 25 parts of chlorine are continuously introduced into the stirred reaction mixture at a uniform rate in a manner such that about 40 mole % of the chlorine is added to the reaction mixture at a temperature of not greater than about 170 °C.

Run 18

Into the reactor vessel as used in Run 17 are charged 544 parts of polyisobutylene having a number average molecular weight of 2225 and 30 parts of maleic anhydride. The resultant reaction mixture is thoroughly mixed using a single disk flat blade turbine with a total mixing energy of 4.334 w/L (22 HP/1000 gal.) The temperature of the reaction mixture is increased at an even rate from 120 to 170 °C. over a period of 2 hours, held at 170 °C. for 2.5 hours, then increased at an even rate up to 220 °C. over a period of 1.5 hours, and the reaction mixture is then sparged with nitrogen for 1.5 hours. During the first five hours of this reaction sequence 25 parts of chlorine are uniformly introduced into the reaction mixture in a manner such that 90 mole % of the chlorine is added to the reaction mixture at a temperature of not greater than about 170 °C.

The Sap. No., AI, F, $f_m/f_d$ ratio, and volume % sediment found in Runs 17-18 are determined and the results are set forth in Table IV.

TABLE IV

| Run No. | HP/1K Gal. | Mole% $Cl_2$ <170 °C | Sap. No. | A.I. (Wt.%) | F | Conv. Eff. | $f_m/f_d$ ratio | Sediment (Vol. %) | AI Ratio |
|---|---|---|---|---|---|---|---|---|---|
| 17 | 17 | 40 | 44 | 64.5 | 0.91 | 71 | 1.43 | 0.06 | 0.92 |
| 18 | 22 | 90 | 42 | 80.0 | 0.86 | 93 | 11.5 | 0.04 | 9.2 |

The data in Table IV also indicate the effect upon the polymer conversion efficiency, $f_m/f_d$ ratio, AI and, hence, the AI Ratio of concurrently increasing the low temperature chlorine charge and total mixing energy.

Run 19

Into a non-baffled stirred tank lab reactor equipped with a non-refluxing overhead condenser is charged 1,000 parts of polyisobutylene having a number average molecular weight of 2,214 ($\bar{M}_w/\bar{M}_n$ = 2.04) and 66 parts of maleic anhydride. The resultant reaction mixture is thoroughly mixed using a single vertical flat blade turbine with a total mixing energy of 4.728 w/L (24 HP/1,000 gallons.) Thereafter, the stirring is continued and the temperature of the reaction mixture is increased at an even rate over a period of 8 hours from 120 °C to 220 °C (i.e., the heat-up period) and is then nitrogen stripped for 1.5 hrs. at 220 °C. 55 parts of gaseous chlorine is continuously charged to the reaction mixture at a uniform rate during the first 4 hours of the heat-up period such that about 100 mole % of the total chlorine charge is added to the stirred reaction mixture at a temperature of not greater than about 170 °C.

Run 20

The procedure of Run 19 is repeated except that 69 parts of maleic anhydride and 59.5 parts of chlorine are employed. Again, the rate of introduction of the chlorine is such that 100 mole % of the total chlorine charged is added to the stirred reaction mixture at a temperature of not greater than about 170 ° C.

Run 21

The procedure of Run 19 is repeated except that 72 parts maleic anhydride and 64 parts of chlorine are employed. Therefore, 100 mole % of the chlorine is also introduced in this reaction at temperature of not greater than about 170 ° C.

The product mixtures of Runs 19 - 21 are characterized and are found to contain low sediment levels and high wt.% active ingredient concentrations. The data thereby obtained are summarized in Table V below:

TABLE V

| Run No. | Mole% $Cl_2$ <170 ° C | Sap. No. | A.I. (Wt.%) | F | Conv. Eff. | $f_m/f_d$ ratio | Sediment (Vol. %) | Al Ratio |
|---|---|---|---|---|---|---|---|---|
| 19 | 100 | 49.6 | 84.0 | 1.03 | 82 | 3.43 | 0.03 | 2.88 |
| 20 | 100 | 53 | 84.4 | 1.10 | 77 | 2.29 | 0.05 | 1.93 |
| 21 | 100 | 55 | 82.9 | 1.14 | 73 | 1.66 | 0.09 | 1.38 |

Runs 22 - 24

In a series of runs, the procedure of the indicated Run is repeated to prepare the following PIBSA product mixtures (with adjusted maleic anhydride and chlorine as needed to achieve the target Sap. No.).

Table VI

| Run No. | Repeat Run | HP/1K Gal. | Sap. No. | F | Conv. Eff. | Sediment (Vol.%) | Al Ratio |
|---|---|---|---|---|---|---|---|
| 22 | 3(1) | 14 | 42 | 0.86 | 89 | -- | 5.5 |
| 23 | 3(2) | 14 | 48 | 0.99 | 81 | -- | 2.5 |
| 24 | 6(3) | 6 | 48 | 0.99 | 87 | 0.03 | 4.7 |

(1) Repeat of procedure of Run 3, except using a maleic anhydride:PIB mole ratio of 1.10:1 and a $Cl_2$:maleic anhydride mole ratio of 1.09:1.
(2) Same as (1) except using a maleic anhydride:PIB mole ratio of 1.35:1.
(3) Repeat of procedure of Run 16 using a dual zone stirrer (upper pitched blade turbine and lower disk flat blade turbine, thereby providing an upper downward-pumping zone and a lower high-shear zone) at a total mixing energy of 1.18 w/L (6 HP/1000 gal.), except that the total maleic anhydride and chlorine charges are adjusted to provide a maleic anhydride:PIB mole ratio of 1.19:1 and a $Cl_2$:maleic anhydride mole ratio of 1.08:1, and the chlorine injection rate and temperature profile is such that 70 mole % of the chlorine is charged at a temperature of not greater than about 170 ° C.

Therefore, at least 70 mol% of the total $Cl_2$ charge in each of Runs 22-24 is introduced into the reaction liquid at a temperature of not greater than 170 ° C.

Runs 25-30: Preparation of Dispersant

A series of polyisobutylene succinimide dispersants are prepared by contacting a polyethylene polyamine, having an average of 5 nitrogen atoms per molecule, with the polyisobutylene-substituted succinic anhydride product mixtures which are formed as in Runs 18 or 22 - 24 above, at the selected mol ratio of the polyethylene polyamine to the polyisobutylene-substituted succinic anhydride product. The reactions to form the dispersants are conducted by contacting the reactants at a temperature of 150 ° C for

1 hour with stirring under $N_2$, followed by sparging with $N_2$ for 1.5 hours, and filtering. The dispersants are each then borated by reaction with boric acid over two hours at 163°C, followed by 2 hours of $N_2$ stripping, then cooling and filtering to give the final product, to provide a boron content in the borated dispersant product mixture of about 0.2 wt% and a nitrogen content of about 0.9 wt%.

The borated dispersants thereby obtained are then formulated into a series of 10W40 lubricating oil compositions, at a constant nitrogen concentration, which oils each also contained the equivalent amounts of hydrocarbon type viscosity index improver, a zinc dialkyl dithiophosphate antiwear additive, an overbased 400 TBN magnesium sulfonate detergent additive, and anti-friction additive, an antioxidant and an antifoamant.

The lubricating oils thereby obtained are tested in a Caterpillar 1-H2 Test, but for 120 hours rather than the full 480 hour test described in ASTM Document for Single Cylinder Engine Test for Evaluating the Performance of Crankcase Lubricants, Caterpillar 1-H2 Test Method, Part 1, STP 509A. This test evalutes the ability of diesel lubricants to curtail accumulation of deposits on the piston when operating in high severity diesel engines.

The results are shown in Table VII below.

TABLE VII

| Caterpillar 1-H2 Test - 120 Hours 10W40 Lubricants | | | | | | | | | |
|---|---|---|---|---|---|---|---|---|---|
| Test Oil | PIBSA | | | | | | SA: | | |
| | From Run No. | Sap. No. (1) | AI (Wt.%) (2) | Conv. Eff.(2) | $f_m/f_d$ Ratio (2) | AI Ratio (2) | N (3) | TGF (4) | WTD (5) |
| 25 | 18 | 42 | 80 | 93 | 11.5 | 9.2 | 0.30 | 3 | 58.6 |
| 26 | 18 | 42 | 80 | 93 | 11.5 | 9.2 | 0.63 | 18 | 43.5 |
| 27 | 22 | 42 | 77 | 89 | 7.2 | 5.5 | 0.30 | 17 | 91.7 |
| 28 | 22 | 42 | 77 | 89 | 7.2 | 5.5 | 0.63 | 20 | 87.9 |
| 29 | 23 | 48 | 80 | 81 | 3.1 | 2.5 | 0.57 | 42 | 86.4 |
| 30 | 24 | 48 | 86 | 87 | 5.5 | 4.7 | 0.57 | 1 | 16.6 |

(1) Saponification numbers as found for the PIBSA product mixture used in preparation of dispersants.
(2) AI, $f_m/f_d$, conversion efficiency and AI Ratio values as found for PIBSA product mixture charged.
(3) Ratio of equivalents of succinic anhydride groups (calculated as the anhydride) charged with the polyisobutylene-substituted succinic anhydride ("PIBSA") the the equivalents of nitrogen atoms charged with the polyethylene polyamine in preparation of the dispersant.
(4) TGF = top groove fill (lower numbers = better results).
(5) WTD = weighted total demits (lower numbers = better results).

The above data illustrate the improved top groove fill and weighted total demerit values obtained in use of dispersant prepared from the polyisobutylene-substituted succinic anhydride product mixtures of Runs 18 and 24, wherein high AI Ratios are obtained, as compared to dispersants having lower AI Ratios at comparable Sap. numbers.

The principles, preferred embodiments, and modes of operation of the present invention have been described in the foregoing specification.

## Claims

**1.** A process for preparing a product mixture containing long chain hydrocarbyl substituted mono- or dicarboxylic acid material which comprises contacting a reaction mixture in a reaction zone with chlorine, said reaction mixture comprising

(A) polyolefin having a number average molecular weight of at least 1,200, and

(B) ethylenically unsaturated mono- or dicarboxylic acid material in an amount effective to provide at least 0.5 mole of (B) charged per mole of (A) charged;

wherein said reaction mixture is mixed employing a total mixing energy of at least 0.788 w/l (4 HP/1000 gal.) at least during contacting of said chlorine therewith, wherein at least 60 mole % of the total amount of chlorine employed in said process is contacted with said reaction mixture at a temperature

of not greater than 170 °C.

2. The process according to claim 1 wherein said ethylenically unsaturated material is selected from (i) monounsaturated $C_4$ to $C_{10}$ dicarboxylic acids wherein (a) the carboxyl groups are vicinal, and (b) at least one of said adjacent carbon atoms are part of said monounsaturation, and (ii) derivatives of (i) selected from anhydrides and $C_1$ to $C_5$ alcohol derived mono- or diesters of (i).

3. The process according to claim 2 wherein said ethylenically unsaturated dicarboxylic acid material is selected from maleic acid, maleic anhydride and mixtures thereof.

4. The process according to any of claims 1 to 3 wherein said polyolefin comprises polybutene.

5. The process according to claim 4 wherein said polyolefin comprises polyisobutylene.

6. The process according to claim 4 or claim 5 wherein said polyolefin has a number average molecular weight of at least 1500.

7. The process according to claim 6 wherein said polyolefin comprises polyisobutylene having a number average molecular weight of from 2,200 to 4,000.

8. The process according to any of claims 1 to 7 wherein said reaction mixture is mixed with a total mixing energy of at least 1.97 w/l (10 HP/1000 gal.) at least during contacting of said chlorine therewith.

9. The process according to claim 8 wherein said reaction mixture is mixed with a total mixing energy of from 1.97 to 5.91 w/l (10 to 30 HP/1000 gal.) at least during contacting of said chlorine therewith.

10. The process according to any of claims 1 to 9 wherein said total amount of chlorine is an amount sufficient to provide at least 0.6 mole of chlorine per mole of (B) charged.

11. The process according to claim 10 wherein said total amount of chlorine is from 0.95 to 1.25 moles of chlorine per mole of (B) charged.

12. The process according to any of claims 1 to 11 wherein at least 70 mole % of said total amount of chlorine is contacted with said reaction mixture at a temperature not greater than 170 °C, preferably from 110 °C.

13. The process according to claim 12 wherein substantially all of said total amount of chlorine is contacted with said reaction mixture at a temperature of from 110 °C to 170 °C.

14. The process according to claim 12 wherein at least 90 mole % of said total amount of chlorine is contacted with said reaction mixture at a temperature of from 130 °C to 170 °C.

15. The process according to any of claims 1 to 11, wherein at least 20 mol% of said total amount of chlorine is contacted with said reaction mixture at a temperature of not greater than 150 °C.

16. The process according to any of claims 1 to 15 which further comprises thereafter elevating the temperature of the reaction mixture to from above 170 °C to 200 °C and contacting an amount of chlorine equal to not more than 40 mole % of said total amount of chlorine employed in said process with said reaction mixture at said elevated temperature.

17. A process as claimed in any of claims 1 to 16 wherein the mole % of chlorine is at least 60%.

18. The process according to any of claims 1 to 17 wherein said polyolefin comprises polybutene and wherein said product mixture is chacterized by a F value of at least 1.3.

19. A process for preparing a low sediment product mixture containing long chain hydrocarbyl substituted mono- or dicarboxylic acid material which comprises contacting a reaction mixture in a reaction zone with chlorine, said reaction mixture comprising

(A) polyolefin having a number average molecular weight of at least 1,200, and

(B) ethylenically unsaturated mono- or dicarboxylic acid material in an amount effective to provide at least about 0.5 mole of (B) charged per mole of (A) charged;

wherein said reaction mixture, is mixed employing a total mixing energy of at least 0.788 w/l (4 HP/1000 gal.) at least during contacting of said chlorine therewith, wherein at least 60 mole % of the total amount of chlorine employed in said process is contacted with said reaction mixture at a temperature of not greater than 170 °C and wherein said product mixture contains less than 0.05 vol.% sediment.

**20.** A process as claimed in claim 19 and one or more of claims 2 to 18.

**21.** The process according to either of claims 19 or 20 wherein said reaction mixture is mixed with plural zone mixing comprising at least one axial pumping zone and at least one high shear zone in said reaction zone.

**22.** The process according to claim 21 wherein said plural zone mixing comprises an upper axial pumping zone adapted for downward pumping and a lower high shear zone, and wherein said chlorine gas is introduced into said reaction zone into or below said high shear zone.

**23.** A lubricating oil dispersant material prepared by reaction of (1) a nucleophilic reactant comprising at least one member selected from the group consisting of amines, alcohols, aminoalcohols and metal compounds with (2) a long chain hydrocarbyl-substituted mono- or dicarboxylic acid material product mixture formed by a process as claimed in any one of claims 1 to 22.

**24.** The dispersant material according to claim 23 wherein said nucleophilic reactant comprises an amine, preferably a polyamine having from 2 to 60 total carbon atoms per molecule and from 3 to 12 nitrogen atoms per molecule.

**25.** The dispersant material according to claim 24 wherein said polyamine comprises an alkylene polyamine selected from polyethylene polyamines and polypropylene polyamines having from 2 to 40 carbon atoms per molecule and from 3 to 12 nitrogen atoms per molecule.

**26.** The dispersant material according to any of claims 23 to 25 wherein said ethylenically unsaturated mono- or dicarboxylic acid material comprises acrylic acid or maleic anhydride.

**27.** The dispersant material according to claim 23 wherein said nucleophilic reactant comprises at least one member selected from the group consisting of a polyoxyalkylene polyamine, a polyalkylene polyamine, a monohydric alcohol, a polyhydric alcohol and a hydroxy amine.

**28.** The dispersant material according to claim 23 wherein said nucleophilic reactant comprises the reaction product of a polyamine and an alpha, beta unsaturated compound of the formula:

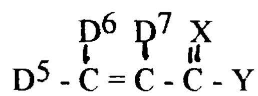

wherein X is sulfur or oxygen, Y is $-OD^8$, $-SD^8$, or $-ND^8(D^9)$, and $D^5$, $D^6$, $D^7$, $D^8$ and $D^9$ are the same or different and are hydrogen or substituted or unsubstituted hydrocarbyl.

**29.** The dispersant material according to claim 27 wherein said nucleophilic reactant comprises tris-(hydroxymethyl) amino methane or at least one polyhydric alkanol containing 3 to 15 hydroxyl groups per molecule.

**30.** The dispersant material according to claim 29 wherein the nucleophilic reactant comprises at least one polyhydric alkanol member selected from the group consisting of glycerol, erythritol, pentaerythritol, dipentaerythritol, mannitol, sorbitol, 1,2,4 hexanetriol, and tetrahydroxy pentane.

## Patentansprüche

1. Verfahren zur Herstellung einer Produktmischung, die mit langkettigem Kohlenwasserstoff substituiertes Mono- oder Dicarbonsäurematerial enthält, bei dem eine Reaktionsmischung in einer Reaktionszone mit Chlor kontaktiert wird, wobei diese Reaktionsmischung
   (A) Polyolefin mit einem durchschnittlichen Molekulargewicht (Zahlenmittel) von mindestens 1200 und
   (B) ethylenisch ungesättigtes Mono- oder Dicarbonsäurematerial in einer Menge, die wirksam ist, um mindestens 0,5 Mol eingebrachtes (B) pro Mol eingebrachtes (A) zu liefern,
   umfaßt, wobei die Reaktionsmischung unter Verwendung einer gesamten Mischenergie von mindestens 0,788 w/l (4 PS/1000 gal.), mindestens während sie mit dem Chlor kontaktiert wird, gemischt wird, wobei mindestens 60 Mol.% der insgesamt in diesem Verfahren verwendeten Chlormenge mit der Reaktionsmischung bei einer Temperatur von nicht mehr als 170 °C kontaktiert werden.

2. Verfahren nach Anspruch 1, bei dem das ethylenisch ungesättigte Material ausgewählt ist aus (i) einfach ungesättigten $C_4$- bis $C_{10}$-Dicarbonsäuren, bei denen (a) die Carboxylgruppen vicinal sind und (b) mindestens eines der benachbarten Kohlenstoffatome Teil der einfachen Ungesättigtheit ist, und (ii) Derivaten von (i) wie Anhydriden oder von $C_1$- bis $C_5$-Alkohol abgeleiteten Mono- oder Diestern von (i).

3. Verfahren nach Anspruch 2, bei dem das ethylenisch ungesättigte Dicarbonsäurematerial ausgewählt ist aus Maleinsäure, Maleinsäureanhydrid und Mischungen daraus.

4. Verfahren nach einem der Ansprüche 1 bis 3, bei dem das Polyolefin Polybuten umfaßt.

5. Verfahren nach Anspruch 4, bei dem das Polyolefin Polyisobutylen umfaßt.

6. Verfahren nach Anspruch 4 oder 5, bei dem das Polyolefin ein durchschnittliches Molekulargewicht (Zahlenmittel) von mindestens 1500 hat.

7. Verfahren nach Anspruch 6, bei dem das Polyolefin Polyisobutylen mit einem durchschnittlichen Molekulargewicht (Zahlenmittel) von 2200 bis 4000 umfaßt.

8. Verfahren nach einem der Ansprüche 1 bis 7, bei dem die Reaktionsmischung insgesamt mit einer Mischenergie von mindestens 1,97 w/l (10 PS/1000 gal.), mindestens während sie mit dem Chlor kontaktiert wird, gemischt wird.

9. Verfahren nach Anspruch 8, bei dem die Reaktionsmischung insgesamt mit einer Mischenergie von 1,97 bis 5,91 w/l (10 bis 30 PS/1000 gal.), mindestens während sie mit dem Chlor kontaktiert wird, gemischt wird.

10. Verfahren nach einem der Ansprüche 1 bis 9, bei dem die gesamte Chlormenge eine Menge ist, die ausreicht, um mindestens 0,6 Mol Chlor pro Mol eingebrachtes (B) zu liefern.

11. Verfahren nach Anspruch 10, bei dem die gesamte Chlormenge 0,96 bis 1,25 Mol Chlor pro Mol eingebrachtes (B) beträgt.

12. Verfahren nach einem der Ansprüche 1 bis 11, bei dem mindestens 70 Mol.% der gesamten Chlormenge mit der Reaktionsmischung bei einer Temperatur von nicht mehr als 170 °C, vorzugsweise ab 110 °C kontaktiert wird.

13. Verfahren nach Anspruch 12, bei dem im wesentlichen alles der gesamten Chlormenge mit der Reaktionsmischung bei einer Temperatur von 110 °C bis 170 °C kontaktiert wird.

14. Verfahren nach Anspruch 12, bei dem mindestens 90 Mol.% der gesamten Chlormenge mit der Reaktionsmischung bei einer Temperatur von 130 °C bis 170 °C kontaktiert wird.

15. Verfahren nach einem der Ansprüche 1 bis 11, bei dem mindestens 20 Mol.% der gesamten Chlormenge mit der Reaktionsmischung bei einer Temperatur von nicht mehr als 150 °C kontaktiert

wird.

16. Verfahren nach einem der Ansprüche 1 bis 15, bei dem außerdem nachfolgend die Temperatur der Reaktionsmischung auf über 170 °C bis 200 °C erhöht wird und eine Chlormenge, die nicht mehr als 40 Mol.% der gesamten in dem Verfahren verwendeten Chlormenge entspricht, mit der Reaktionsmischung bei erhöhter Temperatur kontaktiert wird.

17. Verfahren nach einem der Ansprüche 1 bis 16, bei dem die Mol.% Chlor mindestens 60 % betragen.

18. Verfahren nach einem der Ansprüche 1 bis 17, bei dem das Polyolefin Polybuten umfaßt und die Produktmischung durch einen F-Wert von mindestens 1,3 gekennzeichnet ist.

19. Verfahren zur Herstellung einer Produktmischung mit wenig Sediment, die mit langkettigem Kohlenwasserstoff substituiertes Mono- oder Dicarbonsäurematerial enthält, bei dem eine Reaktionsmischung in einer Reaktionszone mit Chlor kontaktiert wird, wobei diese Reaktionsmischung

(A) Polyolefin mit einem durchschnittlichen Molekulargewicht (Zahlenmittel) von mindestens 1200 und

(B) ethylenisch ungesättigtes Mono- oder Dicarbonsäurematerial in einer Menge, die wirksam ist, um mindestens etwa 0,5 Mol eingebrachtes (B) pro Mol eingebrachtes (A) zu liefern,

umfaßt, wobei diese Reaktionsmischung unter Verwendung einer Mischenergie von mindestens 0,788 w/l (4 PS/1000 gal.), mindestens während sie mit dem Chlor kontaktiert wird, gemischt wird, wobei mindestens 60 Mol.% der insgesamt in diesem Verfahren verwendeten Chlormenge mit der Reaktionsmischung bei einer Temperatur von nicht mehr als 170 °C kontaktiert wird und wobei die Produktmischung weniger als 0,05 Vol.% Sediment enthält.

20. Verfahren nach Anspruch 19 und einem oder mehreren der Ansprüche 2 bis 18.

21. Verfahren nach entweder Anspruch 19 oder 20, bei dem die Reaktionsmischung durch Mehrzonenmischen gemischt wird, welches mindestens eine Schraubenpumpenzone und mindestens eine Zone mit hoher Scherung in der Reaktionszone umfaßt.

22. Verfahren nach Anspruch 21, bei dem das Mehrzonenmischen eine zum Abwärtspumpen vorgesehene obere Schraubenpumpenzone und eine untere Zone mit hoher Scherung umfaßt, und bei dem das Chlorgas in oder unter der Zone mit hoher Scherung in die Reaktionszone eingebracht wird.

23. Schmieröldispergiermittelmaterial, das durch Umsetzung von (1) einem nukleophilen Reaktanten, der mindestens ein Mitglied aus der Gruppe bestehend aus Aminen, Alkoholen, Aminoalkoholen und Metallverbindungen umfaßt, mit (2) einer mit langkettigem Kohlenwasserstoff substituierten Mono- oder Dicarbonsäurenmaterialproduktmischung, die nach einem Verfahren gemäß einem der Ansprüche 1 bis 22 hergestellt ist, hergestellt wird.

24. Dispergiermittelmaterial nach Anspruch 23, bei dem der nukleophile Reaktant ein Amin, vorzugsweise ein Polyamin mit insgesamt 2 bis 60 Kohlenstoffatomen pro Molekül und 3 bis 12 Stickstoffatomen pro Molekül umfaßt.

25. Dispergiermittelmaterial nach Anspruch 24, bei dem das Polyamin ein Alkylenpolyamin ausgewählt aus Polyethylenpolyaminen und Polypropylenpolyaminen mit 2 bis 40 Kohlenstoffatomen pro Molekül und 3 bis 12 Stickstoffatomen pro Molekül umfaßt.

26. Dispergiermittelmaterial nach einem der Ansprüche 23 bis 25, bei dem das ethylenisch ungesättigte Mono- oder Dicarbonsäurematerial Acrylsäure oder Maleinsäureanhydrid umfaßt.

27. Dispergiermittelmaterial nach Anspruch 23, bei dem der nukleophile Reaktant mindestens ein Mitglied ausgewählt aus der Gruppe bestehend aus Polyoxyalkylenpolyamin, Polyalkylenpolyamin, einwertigem Alkohol, mehrwertigem Alkohol und Hydroxyamin umfaßt.

28. Dispergiermittel nach Anspruch 23, bei dem der nukleophile Reaktant das Reaktionsprodukt aus einem Polyamin und einer $\alpha,\beta$-ungesättigten Verbindung mit der Formel

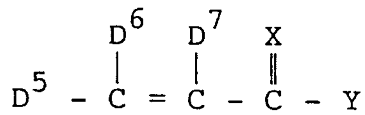

umfaßt, in der X Schwefel oder Sauerstoff ist, Y $-OD^8$, $-SD^8$ oder $-ND^8(D^9)$ ist und $D^5$, $D^6$, $D^7$, $D^8$ und $D^9$ gleich oder unterschiedlich sind und Wasserstoff oder substituierter oder unsubstituierter Kohlenwasserstoff sind.

**29.** Dispergiermittelmaterial nach Anspruch 27, bei dem der nukleophile Reaktant Tris(hydroxymethyl)-aminomethan oder mindestens ein mehrwertiges Alkanol mit 3 bis 15 Hydroxylgruppen pro Molekül umfaßt.

**30.** Dispergiermittelmaterial nach Anspruch 29, bei dem der nukleophile Reaktant mindestens ein mehrwertiges Alkanolmitglied ausgewählt aus der Gruppe bestehend aus Glycerin, Erythrit, Pentaerythrit, Dipentaerythrit, Mannit, Sorbit, 1,2,4-Hexantriol und Tetrahydroxypentan umfaßt.

**Revendications**

**1.** Procédé de préparation d'un mélange de produits contenant une matière du type acide mono- ou dicarboxylique à substituant hydrocarbyle à chaîne longue, qui comprend la mise en contact d'un mélange réactionnel dans une zone réactionnelle avec du chlore, ledit mélange réactionnel comprenant
(A) une polyoléfine ayant une moyenne numérique du poids moléculaire d'au moins 1200, et
(B) une matière du type acide mono- ou dicarboxylique à insaturation éthylénique en une quantité efficace pour fournir au moins 0,5 mole de (B) introduite par mole de (A) introduite ;
dans lequel ledit mélange réactionnel est mélangé en utilisant une énergie totale de mélange d'au moins 0,788 W/l (4 HP/1000 gallons) au moins pendant la mise en contact du chlore avec ce mélange, au moins 60 moles % de la quantité de chlore utilisée dans ledit procédé étant mise en contact avec ledit mélange réactionnel à une température non supérieure à 170 °C.

**2.** Procédé suivant la revendication 1, dans lequel la matière à insaturation éthylénique est choisie entre (i) des acides dicarboxyliques en $C_4$ à $C_{10}$ mono-insaturés dans lesquels (a) les groupes carboxyle sont vicinaux, et (b) au moins un desdits atomes de carbone adjacents fait partie de ladite mono-insaturation, et (ii) des dérivés des composés (i) choisis entre des anhydrides et des mono- ou diesters dérivés d'alcool en $C_1$ à $C_5$ des composés (i).

**3.** Procédé suivant la revendication 2, dans lequel la matière du type acide dicarboxylique à insaturation éthylénique est choisi entre l'acide maléique, l'anhydride maléique et leurs mélanges.

**4.** Procédé suivant l'une quelconque des revendications 1 à 3, dans lequel la polyoléfine comprend le polybutène.

**5.** Procédé suivant la revendication 4, dans lequel la polyoléfine comprend le polyisobutylène.

**6.** Procédé suivant la revendication 4 ou la revendication 5, dans lequel la polyoléfine possède une moyenne numérique du poids moléculaire d'au moins 1500.

**7.** Procédé suivant la revendication 6, dans lequel la polyoléfine comprend un polyisobutylène ayant une moyenne numérique du poids moléculaire de 2500 à 4000.

**8.** Procédé suivant l'une quelconque des revendications 1 à 7, dans lequel le mélange réactionnel est mélangé au moyen d'une énergie totale de mélange d'au moins 1,97 W/l (10 HP/1000 gallons) au moins pendant la mise en contact du chlore avec ce mélange.

**9.** Procédé suivant la revendication 8, dans lequel le mélange réactionnel est mélangé au moyen d'une énergie totale du mélange de 1,97 à 5,91 W/l (10 à 30 HP/1000 gallons) au moins pendant la mise en contact du chlore avec ce mélange.

**10.** Procédé suivant l'une quelconque des revendications 1 à 9, dans lequel la quantité totale de chlore est une quantité suffisante pour fournir au moins 0,6 mole de chlore par mole de composé (B) introduite.

**11.** Procédé suivant la revendication 10, dans lequel la quantité totale de chlore est comprise dans l'intervalle de 0,95 à 1,25 mole de chlore par mole de composé (B) introduite.

**12.** Procédé suivant l'une quelconque des revendications 1 à 11, dans lequel au moins 70 moles % de la quantité totale de chlore est mise en contact avec le mélange réactionnel à une température non supérieure à 170 ° C, de préférence à partir de 110 ° C.

**13.** Procédé suivant la revendication 12, dans lequel pratiquement la totalité de la quantité totale de chlore est mise en contact avec le mélange réactionnel à une température de 110 ° C à 170 ° C.

**14.** Procédé suivant la revendication 12, dans lequel au moins 90 modes % de la quantité totale de chlore est mise en contact avec le mélange réactionnel à une température de 130 ° C à 170 ° C.

**15.** Procédé suivant l'une quelconque des revendications 1 à 11, dans lequel au moins 20 moles % de la quantité totale de chlore est mise en contact avec le mélange réactionnel à une température non supérieure à 150 ° C.

**16.** Procédé suivant l'une quelconque des revendications 1 à 15, qui comprend en outre l'élévation ultérieure de la température du mélange réactionnel de plus de 170 ° C à 200 ° C et la mise en contact d'une quantité de chlore égale à pas plus de 4 moles % de ladite quantité totale de chlore utilisée dans ledit procédé avec ledit mélange réactionnel à ladite température élevée.

**17.** Procédé suivant l'une quelconque des revendications 1 à 16, dans lequel le pourcentage molaire de chlore est égal à au moins 60 %.

**18.** Procédé suivant l'une quelconque des revendications 1 à 17, dans lequel la polyoléfine comprend le polybutène et le mélange de produits est caractérisé par une valeur de F d'au moins 1,3.

**19.** Procédé de préparation d'un mélange de produits à basse teneur en sédiment contenant une matière du type acide mono- ou dicarboxylique à substituant hydrocarbyle à chaîne longue, qui comprend la mise en contact d'un mélange réactionnel dans une zone réactionnelle avec du chlore, ledit mélange réactionnel comprenant

(A) une polyoléfine ayant une moyenne numérique du poids moléculaire d'au moins 1200, et

(B) une matière du type acide mono- ou dicarboxylique à insaturation éthylénique en une quantité efficace pour fournir au moins environ 0,5 mole de composé (B) introduite par mole de composé (A) introduite,

dans lequel ledit mélange réactionnel est mélangé au moyen d'une énergie totale de mélange d'au moins 0,788 W/l (4 HP/1000 gallons) au moins pendant la mise en contact du chlore avec ce mélange, une quantité d'au moins 60 moles % de la quantité totale de chlore utilisée dans ledit procédé est mise en contact avec ledit mélange réactionnel à une température non supérieure à 170 ° C, et ledit mélange de produits contient moins de 0,05 % en volume de sédiment.

**20.** Procédé suivant la revendication 19 et une ou plusieurs des revendications 2 à 18.

**21.** Procédé suivant la revendication 19 ou 20, dans lequel le mélange réactionnel est mélangé par un mélange en plusieurs zones comprenant au moins une zone axiale de pompage et au moins une zone à fort cisaillement dans ladite zone réactionnelle.

**22.** Procédé suivant la revendication 21, dans lequel le mélange en plusieurs zones comprend un mélange dans une zone axiale supérieure de pompage apte à un pompage descendant et une zone inférieure à fort cisaillement, et dans lequel le chlore gazeux est introduit dans ladite zone réactionnelle à l'intérieur ou au-dessous de ladite zone à fort cisaillement.

**23.** Dispersant pour huile lubrifiante, préparé par réaction (1) d'un corps réactionnel nucléophile comprenant au moins un membre choisi dans le groupe consistant en des amines, des alcools, des amino-alcools et des composés métalliques avec (2) un mélange de produits contenant une matière du type acide mono- ou dicarboxylique à substituant hydrocarbyle à chaîne longue formé par un procédé suivant l'une quelconque des revendications 1 à 22.

**24.** Dispersant suivant la revendication 23, dans lequel le corps réactionnel nucléophile comprend une amine, de préférence une polyamine ayant 2 à 60 atomes de carbone totaux par molécule et 3 à 12 atomes d'azote par molécule.

**25.** Dispersant suivant la revendication 24, dans lequel la polyamine comprend une alkylènepolyamine choisie entre des polyéthylènepolyamines et des polypropylènepolyamines ayant 2 à 40 atomes de carbone par molécule et 3 à 12 atomes d'azote par molécule.

**26.** Dispersant suivant l'une quelconque des revendications 23 à 25, dans lequel la matière du type acide mono- ou dicarboxylique à insaturation éthylénique comprend l'acide acrylique ou l'anhydride maléique.

**27.** Dispersant suivant la revendication 23, dans lequel le corps réactionnel nucléophile comprend au moins un membre choisi dans le groupe consistant en une polyoxyalkylènepolyamine, une polyalkylènepolyamine, un alcool monohydroxylique, un alcool polyhydroxylique et une hydroxyamine.

**28.** Dispersant suivant la revendication 23, dans lequel le corps réactionnel nucléophile comprend le produit de réaction d'une polyamine et d'un composé alpha,bêta insaturé de formule :

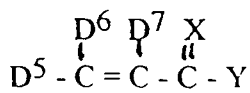

dans laquelle X représente le soufre ou l'oxygène, Y représente un groupe $-OD^8$, $-SD^8$ ou $-ND^8(D^9)$ et $D^5$, $D^6$, $D^7$ et $D^9$ sont identiques ou différents et représentent l'hydrogène ou des groupes hydrocarbyle substitués ou non substitués.

**29.** Dispersant suivant la revendication 27, dans lequel le corps réactionnel nucléophile comprend le tris-(hydroxyméthyl)aminométhane ou au moins un alcanol polyhyroxylique contenant 3 à 15 groupes hydroxyle par molécule.

**30.** Dispersant suivant la revendication 29, dans lequel le corps réactionnel nucléophile comprend au moins un alcanol polyhydroxylique choisi dans le groupe consistant en le glycérol, l'érythritol, le pentaérythritol, le dipentaérythritol, le mannitol, le sorbitol, le 1,2,4-hexanetriol et le tétrahydroxypentane.

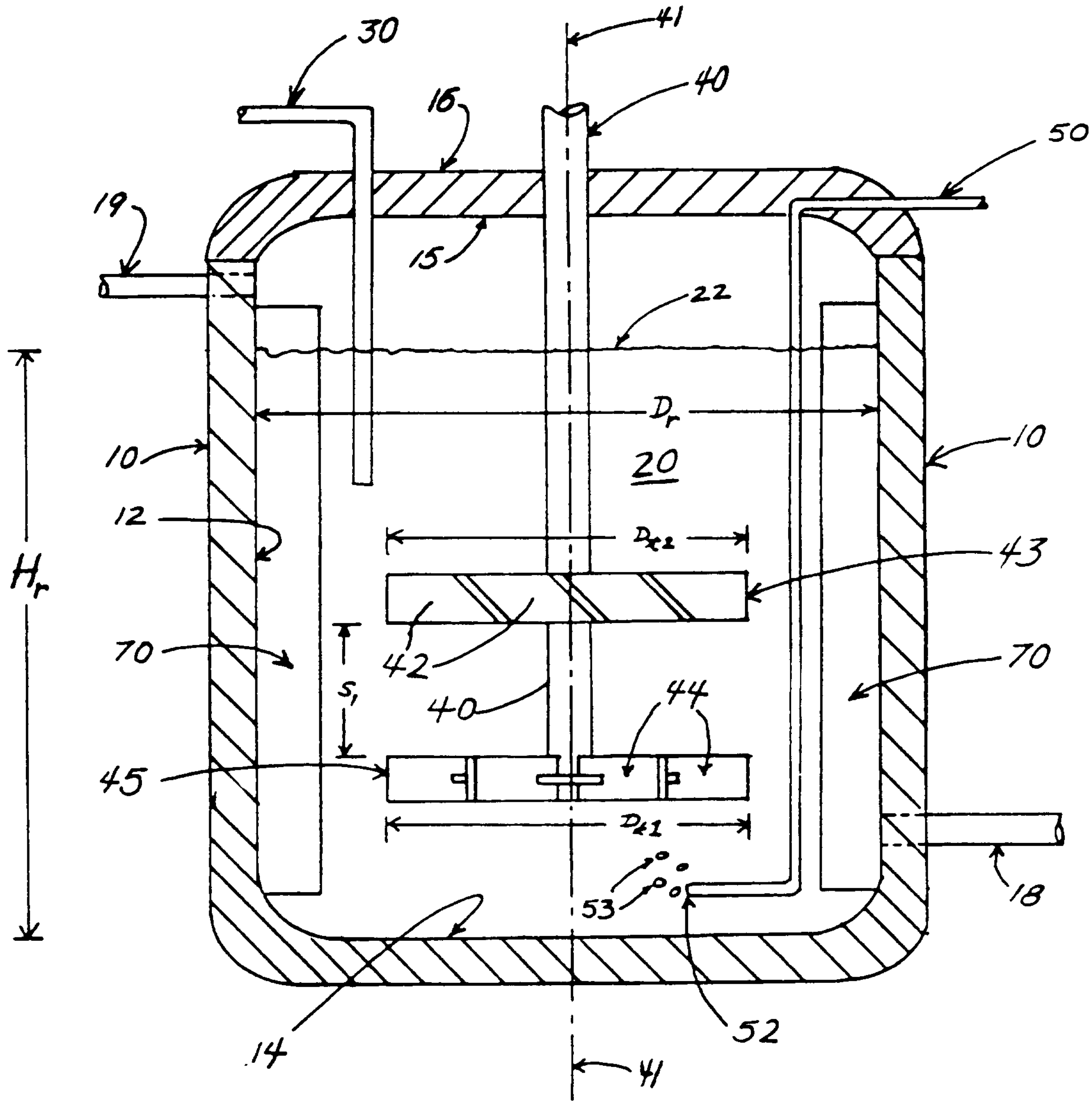
30
41
40
16
50
19
15
22
$D_r$
10
10
20
12
$D_{t2}$
43
$H_r$
42
70
70
$S_1$
40
44
45
$D_{t1}$
18
53
14
52
41

FIGURE 1.

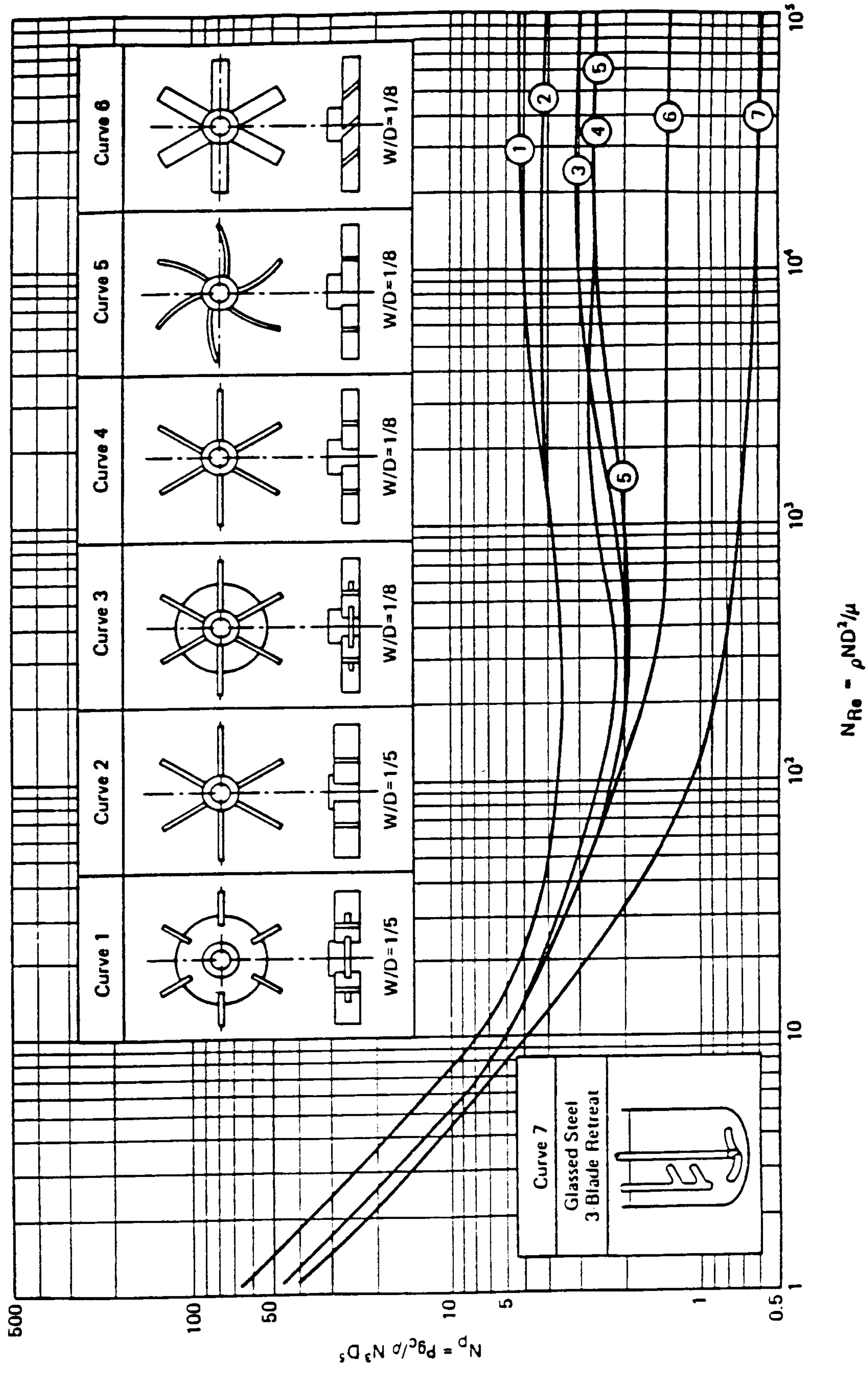
Curve 1
W/D=1/5
Curve 2
W/D=1/5
Curve 3
W/D=1/8
Curve 4
W/D=1/8
Curve 5
W/D=1/8
Curve 6
W/D=1/8
Curve 7
Glassed Steel
3-Blade Retreat
500
100
50
10
5
1
0.5
1
10
10²
10³
10⁴
10⁵
N_P = Pg_c/ρ N³D⁵
N_Re = ρND²/μ

FIGURE 2